(19) Europäisches Patentamt / European Patent Office / Office européen des brevets

(11) **EP 2 066 055 A1**

(12) **EUROPEAN PATENT APPLICATION**
published in accordance with Art. 153(4) EPC

(43) Date of publication:
**03.06.2009 Bulletin 2009/23**

(51) Int Cl.:
*H04L 1/00* (2006.01)   *H04J 15/00* (0000.00)
*H04Q 7/38* (0000.00)

(21) Application number: **06810959.4**

(22) Date of filing: **29.09.2006**

(86) International application number:
**PCT/JP2006/319604**

(87) International publication number:
**WO 2008/041309 (10.04.2008 Gazette 2008/15)**

(84) Designated Contracting States:
**DE FR GB IT**
Designated Extension States:
**AL BA HR MK RS**

(71) Applicant: **Fujitsu Limited**
**Kawasaki-shi, Kanagawa 211-8588 (JP)**

(72) Inventor: **MIYAZAKI, Shunji**
**Kawasaki-shi, Kanagawa 211-8588 (JP)**

(74) Representative: **Stebbing, Timothy Charles**
**Haseltine Lake**
**Lincoln House, 5th Floor**
**300 High Holborn**
**London WC1V 7JH (GB)**

(54) **WIRELESS COMMUNICATION SYSTEM, TRANSMITTER APPARATUS AND RECEIVER APPARATUS**

(57)   In a transmitter 2 of a communications system 1 where a wireless communication is made between the transmitter 2 and a receiver 3, an information bit generating unit generates information bits from data to be transmitted. A sub-block generating unit generates a sub-block including information bits in units. A coding unit 24 generates coded bits by merging and collectively coding sub-blocks of plural units. An antenna transmitting unit 27 generates sub-block coded bits by distributing the coded bits output from the coding unit 24, and transmits the generated sub-block coded bits to the receiver 3.

F I G .  1 9

**Description**

Technical Field

The present invention relates to a wireless communications technique, and more particularly, to a modulation and coding method.

Background Art

Adaptive Modulation and Coding (hereinafter referred to as AMC) exists as a technique for making a wireless communication while selecting an optimum communication method. If AMC is applied in a spatial multiplexing transmission using MIMO (Multiple Input Multiple Output), a transmission stream set by selecting an optimum information bit length, modulation method, and coding rate for each transmission/reception antenna can be formed. A modulation and coding scheme (MCS) is decided by measuring the SNR (Signal-to-Noise Ratio) of received data for each transmission stream in a receiver, and by selecting an optimum scheme based on the value of the SNR in a transmitter that receives measurement results from the receiver.

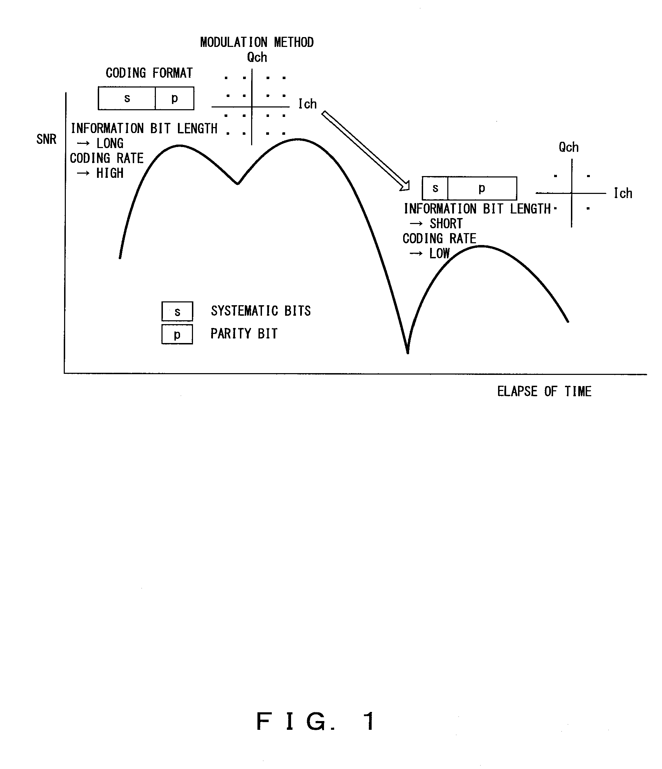

Fig. 1 is a schematic diagram for explaining a relationship between SNR and a throughput. The vertical and the horizontal axes represent SNR and time respectively. Fig. 1 represents that the value of the SNR decreases with the elapse of time although the value is large immediately after a communication is started.

When the SNR changes as represented in Fig. 1, large values of an information bit length and a coding rate are selected for a coding method, and a more multilevel modulation method (16-QAM in the example represented in Fig. 1) is selected as a modulation method immediately after the communication is started. When the value of the SNR decreases with the elapse of time, smaller values of the information bit length and the coding rate are set for the coding method, and a less multilevel modulation method (QPSK in the example shown in Fig. 1) is set as the modulation method. By suitably setting a modulation and coding method in accordance with the value of the SNR as described above, data can be always transmitted/received as an optimum throughput even under an environment where the reception performance of a signal in a receiver varies in a short time.

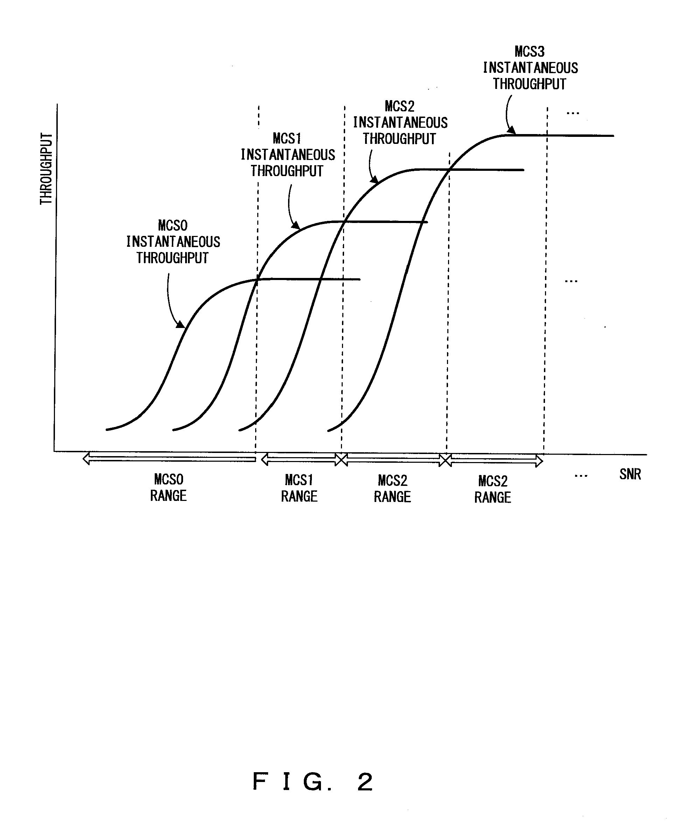

Fig. 2 is a schematic diagram for explaining a method for deciding MCS based on a relationship between SNR and a throughput. MCS is selected so that the throughput becomes maximum for each value of the SNR. As the value of the SNR increases, so does the throughput. However, if the value of the SNR becomes larger than some value, the throughput does not become larger than a certain value. For example, if the value of the SNR is relatively small, MCS0 is selected. Here, MCS0 and MSC1 respectively indicate a combination of an information length, and a coding and modulation method, and are prepared in a communications system beforehand so that an optimum combination can be selected in accordance with the value of the SNR. In Fig. 2, for example, MCS0 indicates a combination of an information length, and a coding and modulation method when the value of the SNR is equal to or smaller than a threshold value THO. If the value of the SNR becomes larger than the threshold value THO, the throughput does not become larger than a certain value. Therefore, MCS1 that is expected to improve the throughput is selected. Similarly, MCS that is expected to maximize the throughput is selected in accordance with the value of the SNR.

By selecting MCS in accordance with the SNR as described above, coding is made at low rate, for example, if the value of the SNR is relatively small. Specifically, the coding rate is dropped by decreasing the number of information bits and adopting a modulation method (such as QPSK modulation) of low frequency efficiency as a modulation method. In the meantime, if the value of the SNR is relatively large, the coding rate is raised by increasing the number of information bits and adopting a modulation method (such as 16-QAM modulation) of high frequency efficiency as a modulation method.

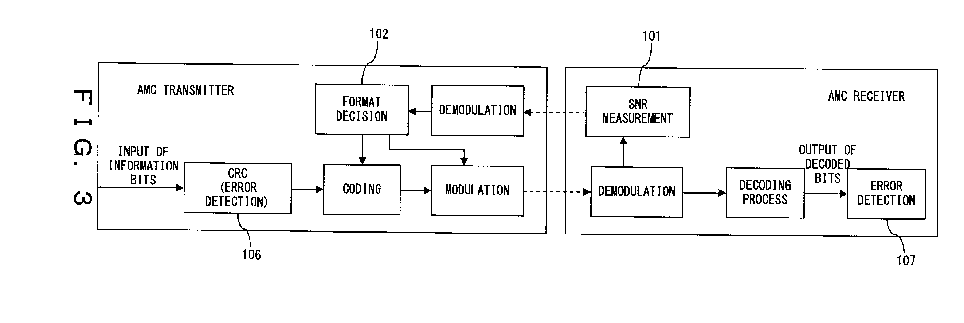

Fig. 3 is a block diagram depicting AMC transmitter and receiver according to conventional techniques. This figure depicts the configuration where the numbers of transmission and reception antennas are respectively one.

In the receiver, SNR is measured by an SNR measuring unit 101, and the measured SNR is notified to the transmitter. In the transmitter, after the SNR is obtained by demodulating a carrier wave, an optimum MCS is selected by a format deciding unit 102 based on the value of the SNR. Then, predetermined information bits are coded along with a CRC (Cyclic Redundancy Checking) value for detecting an error, and the coded bits are modulated and transmitted to the receiver. Error detecting (CRC) units 106 and 107 that are respectively provided in the transmitter and the receiver will be described later. The MCS decided in the transmitter is notified from the transmitter to the receiver by using another control signal.

In the receiver, demodulation and decoding processes are executed according to the specified MCS based on received control information, and the SNR of the received data is measured. Thereafter, the process for transmitting SNR information from the receiver to the transmitter, the process for selecting an optimum MCS in the transmitter and for notifying the receiver of the selected MCS, and the demodulation and the decoding processes in accordance with the MCS in the receiver are similarly repeated as described above. Fig. 3 depicts the configuration (SISO: Single Input Single Output) where one transmission antenna and one reception antenna are provided. However, the above described AMC can be also applied to a configuration (MIMO) where pluralities of transmission and reception antennas are provided.

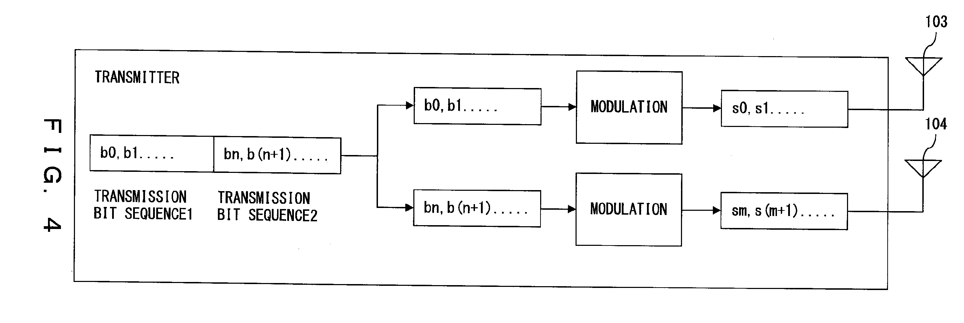

Fig. 4 is a block diagram depicting a transmitter in a case where a spatial multiplexing transmission is made with MIMO. This figure depicts the configuration where two transmission antennas are provided. A transmission bit sequence 1 is modulated and transmitted from one antenna 103, whereas a transmission bit sequence 2 is modulated and transmitted from the other antenna 104. At some timing, different symbols are transmitted respectively from the antennas 103 and 104. The symbols that are respectively transmitted from the antennas are multiplexed on a propagation path.

If AMC is applied in the spatial multiplexing transmission using MIMO, two types of methods are considered. With the first method, one code word (coded block) is distributed to a plurality of antennas in the transmitter, and information bits are transmitted to the receiver. Here, a rate control using a single code word is referred to as SCWRC (Single Code Word Rate Control) .

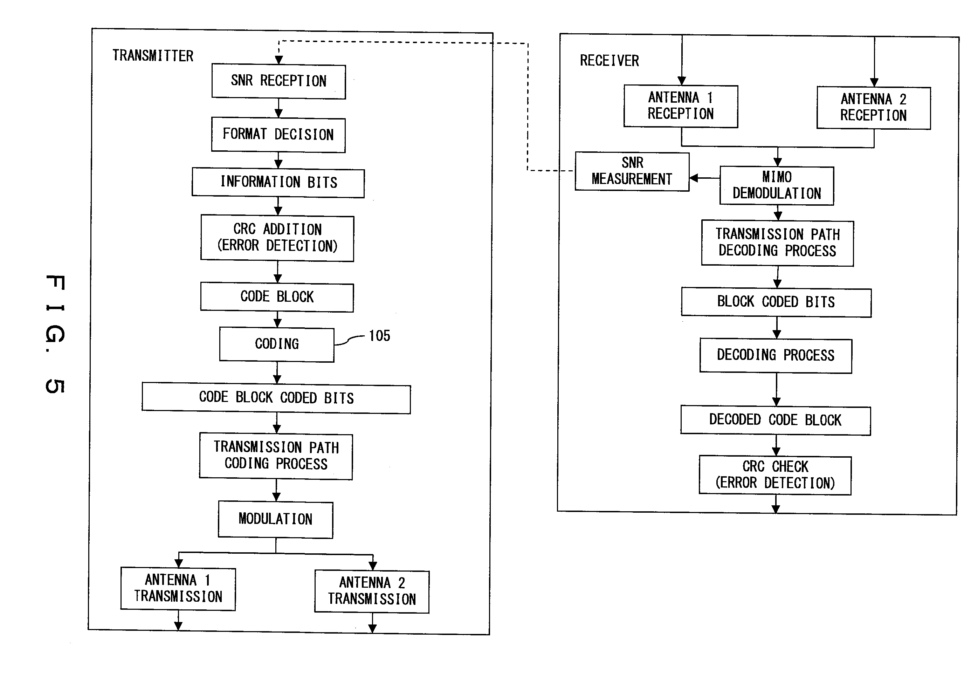

Fig. 5 is a block diagram depicting AMC transmitter and receiver that can perform AMC with SCWRC. AMC is applied to a block coded by a coding unit 105. As described above, one scheme is notified to the receiver by using one coded block in SCWRC. In the receiver, a demodulation and decoding method for data received from both of antennas 1 and 2 is set based on the received data.

In the meantime, with the second method, a coded block is assigned to each antenna in the transmitter, and information bits are independently transmitted to the receiver. Here, a rate control performed for each antenna is referred to as PARC (Per Antenna Rate Control).

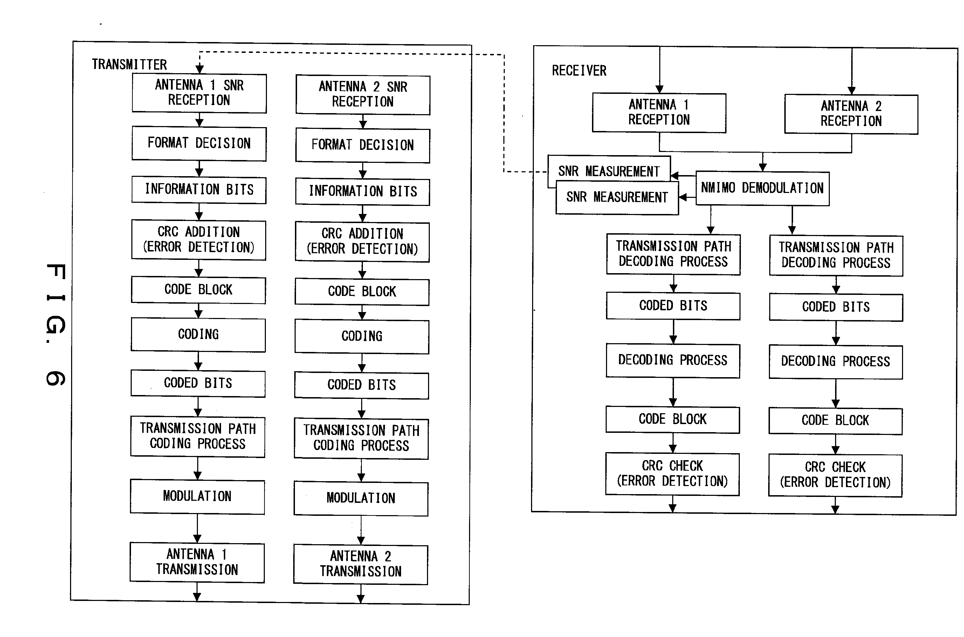

Fig. 6 is a block diagram depicting AMC transmitter and receiver that can perform AMC with PARC. In the transmitter having the configuration depicted in Fig. 6, a scheme is set for each antenna, and coded bits respectively obtained by coding a code block are transmitted from transmission antennas 1 and 2 respectively. In the receiver, a demodulation and decoding method is respectively set for the data received by reception antennas 1 and 2.

A comparison is made between these two methods. The method for performing AMC with SCWRC can simplify the configurations of the transmitter and the receiver, whereas the method for performing AMC with PARC can promise to achieve a higher throughput characteristic. The reason why these differences occur is further described.

With SCWRC, an average value of SNRs measured respectively for reception antennas is obtained, and MCS is selected based on the obtained average value. Namely, MCS is selected based on an average value. Therefore, if the values of SNRs vary respectively in the antennas, an error rate becomes high. To reduce the error rate, for example, to set BLER (Block Error Rate) to 0.1, an information bit length that is one item of information included in MCS is set to a small value. However, the throughput decreases by setting the information bit length to a small value.

In contrast, with PARC, MCS can be selected for the SNR of each of the reception antennas. The transmitter side requires a configuration for setting MCS for each antenna and for coding and transmitting bits to the receiver, whereas the receiver side requires a configuration for decoding MCS for each antenna to set a decoding and demodulation method. Therefore, the configuration becomes more complex than that of SCWRC. However, since coding is individually made, coding/decoding can be efficiently made. This leads to an increase in the throughput compared with SCWRC.

A method for splitting and transmitting an information bit block according to a conventional technique is described here.

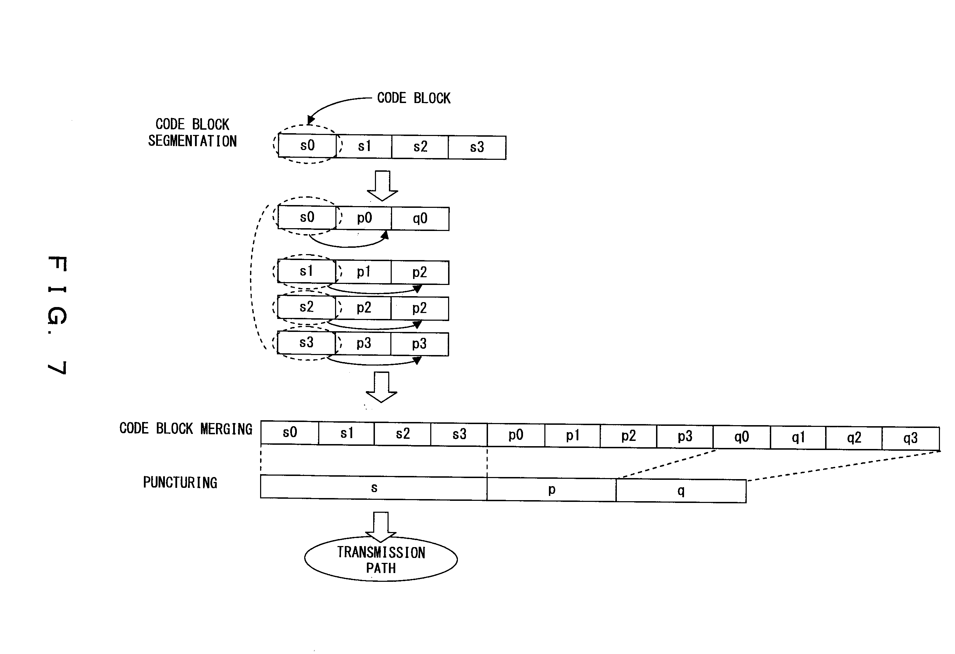

Fig. 7 is a schematic diagram for explaining a conventional code block segmentation technique. The code block segmentation is a technique related to the coding of a long information bit length, and laid down by 3GPP as specifications. Here, the conventional code block segmentation is described with reference to the drawings by taking a turbo code of a coding rate R=1/3 as an example.

The code block segmentation process is applied when the size of a block that is obtained by adding a CRC parity bit to an information bit block exceeds 5114, and the block is split into code blocks of an equal length so that each size of information bits does not exceed 5114. Fig. 7 depicts the format of the block in the case where the number of code blocks is four since the block size exceeds $5114 \times 3 = 15342$. Coding is made to the split code blocks respectively. In the example depicted in Fig. 7, the coding is made to code blocks s0, s1, s2 and s3 respectively. Coded bits resulting from the coding are serially merged. Then, a process such as puncturing, etc. is executed for the merged coded block that is recognized as one block, which is then transmitted to a transmission path.

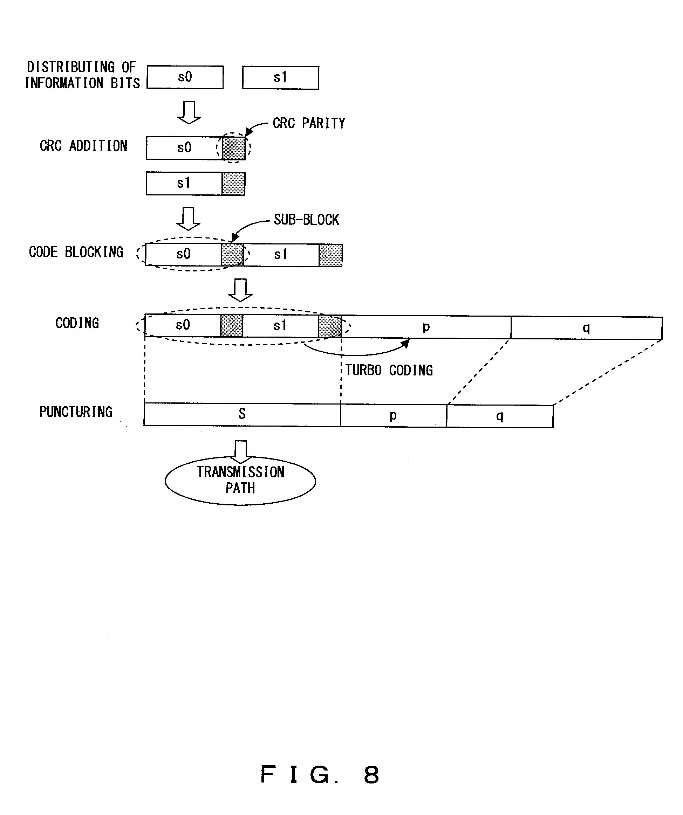

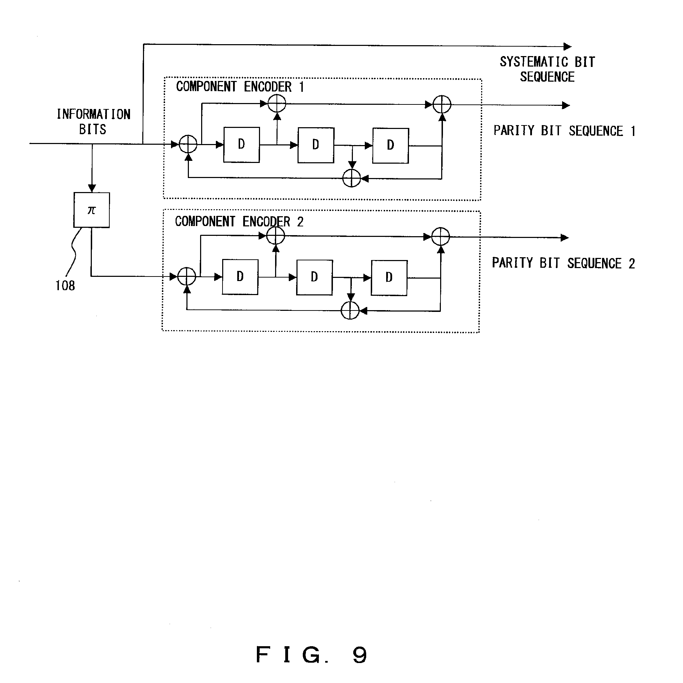

Here, the conventional process for serially merging and coding a plurality of information bit blocks, and the conventional process for decoding serially merged and coded bits are described. The coding and the decoding processes described below with reference to Figs. 8 and 9 are applied to the transmission/reception of various items of data.

Fig. 8 is a schematic diagram for explaining the conventional process for serially merging and coding a plurality of information bit blocks. This figure depicts the case where two sub-blocks are merged and coded for ease of explanation.

After a CRC parity bit that is an error detection code is added to two information bits s0 and s1, they are serially merged to obtain a code block. At this time, the information bits including the CRC parity bit are referred to as a sub-block. The coding process is executed for the obtained code block. Here, the above described turbo coding is made. If the information bits s0 and s1 are arranged in this order in a bit string from the beginning of a systematic bit sequence as depicted in Fig. 8, the positions of the information bits and the CRC parity bits among the coded bits are known.

Patent Document 1 related to HARQ (Hybrid Automatic Repeat reQuest) is referenced as a prior art document of this application.

Patent Document 1: International Publication Pamphlet No. WO 06/070465

A turbo code and an LDPC code have a characteristic that an error rate characteristic is improved with an increase in a systematic bit length. The bit length of coded bits that are transmitted from the transmitter in order to control AMC or HARQ by using PARC is shorter than that in the case using SCWRC. This is because the information bits are coded for each antenna.

Additionally, with the conventional code block segmentation, coding is made after the number of partitions of a block is decided. Therefore, a block of a size that exceeds $5114 \times 3 = 15342$ is partitioned into four, whereas a block of, for example, a size that is slightly smaller than 15342 is partitioned into three in the above provided example. Therefore, the size of each coded bits obtained by partitioning the block of the size that exceeds 15342 sometimes becomes smaller.

To improve the error rate characteristic, it is preferable that an information bit length that is a coding unit is increased as long as possible.

Disclosure of Invention

An obj ect of the present invention is to provide a technique that improves not only a coding gain and but also a throughput by increasing the bit length of information bits in coding units.

A wireless communications system according to one embodiment of the present invention is a wireless communications system in which a wireless communication is made between a first communicating apparatus and a second communicating apparatus, wherein the first communicating apparatus comprises an information bit generating unit configured to generate information bits from data to be transmitted, a sub-block generating unit configured to generate a sub-block including the information bits in units, a coding unit configured to generate coded bits by merging and collectively coding the sub-blocks of plural units, and a transmitting unit configured to generate sub-block coded bits by distributing the coded bits output from the coding unit, and to transmit the generated sub-block coded bits to the second communicating apparatus.

According to the above described one embodiment of the present invention, sub-blocks are merged and collectively coded when a coding process is executed for the sub-blocks. A code length can be increased in comparison with the case where the coding process is executed for each sub-block. With an increase in the code length, the error rate characteristic is improved, leading to improvements in a throughput.

According to another embodiment of the present invention, the second communicating apparatus comprises a receiving unit configured to receive the sub-block coded bits, and a decoding unit configured to obtain the sub-blocks by merging and collectively decoding the plurality of received sub-block coded bits.

According to a further embodiment of the present invention, the second communicating apparatus further comprises a determining unit configured to determine, for each of the sub-block, whether or not a reception error of the sub-block exists, and a requesting unit configured to issue to the first communicating apparatus a retransmission request of all of the sub-blocks, a sub-block determined to be a reception error and the sub-block obtained by merging and collectively coding with the sub-block determined to be a reception error, wherein the transmitting unit of the first communicating apparatus executes a retransmission process in accordance with the retransmission request when receiving the retransmission request. If the sub-block determined to be a reception error exists on the receiving side, a retransmission process for all of coded sub-blocks along with the sub-block is executed. The retransmission process may be executed to retransmit only the sub-block that is determined to be a reception error.

According to the present invention, a coding process is collectively executed for merged sub-blocks, thereby improving the error rate characteristic in comparison with the case where the coding process is executed for each sub-block. This leads to improvements in the throughput.

Brief Description of Drawings

Fig. 1 is a schematic diagram for explaining a relationship between SNR and a throughput;

Fig. 2 is a schematic diagram for explaining a method for deciding MCS based on a relationship between SNR and a throughput;

Fig. 3 is a block diagram depicting AMC transmitter and receiver according to conventional techniques;

Fig. 4 is a block diagram depicting a transmitter in a case where a spatial multiplexing transmission is made with MIMO;

Fig. 5 is a block diagram depicting AMC transmitter and receiver that can perform AMC with SCWRC;

Fig. 6 is a block diagram depicting AMC transmitter and receiver that can perform AMC with PARC;

Fig. 7 is a schematic diagram for explaining a conventional code block segmentation technique;

Fig. 8 is a schematic diagram for explaining a conventional process for serially merging and coding a plurality of code blocks;

Fig. 9 is a block diagram depicting a turbo encoder that is a related technique;

Fig. 10 is a block diagram depicting a turbo decoder that is a related technique;

Fig. 11 is a block diagram depicting a turbo encoder having a configuration for making coding by using a dummy bit insertion method;

Fig. 12 is a block diagram depicting a turbo decoder having a configuration for making decoding by using the dummy bit insertion method;

Fig. 13 is a schematic diagram exemplifying an LDPC matrix;

Fig. 14 is a block diagram depicting an IRA encoder;

Fig. 15 is a block diagram depicting an IRA decoder;

Fig. 16 is a block diagram depicting a transmitter and a receiver, which have an HARQ function;

Fig. 17 is a flowchart representing a data transmission/reception process;

Fig. 18 is a block diagram depicting a turbo decoder that decodes coded bits obtained by serially merging and coding a plurality of code blocks;

Fig. 19 is a block diagram depicting a communications system according to a first embodiment;

Fig. 20 is a schematic diagram for explaining the operations of a coding unit according to the first embodiment;

Fig. 21 is a schematic diagram for explaining the operations of a sub-block decoding unit according to the first embodiment;

Fig. 22 is a block diagram depicting a transmitter according to a second embodiment;

Fig. 23 is a block diagram depicting a receiver according to the second embodiment;

Fig. 24 is a flowchart representing a retransmission control process to which HARQ is applied in the transmitter according to the second embodiment;

Fig. 25 is a flowchart representing a retransmission control process to which HARQ is applied in the receiver according to the second embodiment;

Fig. 26 is a flowchart representing a retransmission control process to which HARQ is applied in a transmitter according to a third embodiment;

Fig. 27 is a flowchart representing a retransmission control process to which HARQ is applied in a receiver according to the third embodiment;

Fig. 28 is a block diagram depicting a coding unit according to a fourth embodiment;

Fig. 29 is a block diagram depicting a sub-block decoding unit according to the fourth embodiment;

Fig. 30 is a block diagram depicting a coding unit according to a fifth embodiment;

Fig. 31 is a block diagram depicting a sub-block decoding unit according to the fifth embodiment;

Fig. 32 is a block diagram depicting a coding unit according to a sixth embodiment;

Fig. 33 is a schematic diagram representing a data format in a case where a coding method according to a seventh embodiment is applied;

Fig. 34 is a block diagram depicting a coding unit according to an eighth embodiment;

Fig. 35 is a schematic diagram representing a data format in a case where a coding method according to a ninth embodiment is applied;

Fig. 36 is a block diagram depicting a transmitter according to the ninth embodiment; and

Fig. 37 is a block diagram depicting a receiver according to the ninth embodiment.

Best Mode of Carrying Out the Invention

Preferred embodiments according to the present invention are described in detail below with reference to the drawings.

<related techniques>

Techniques related to the present invention are initially described.

As an error correction code that is used in a wireless communication, a turbo code and an LDPC (Low Density Parity Check) code can be cited. Here, turbo and LDPC coding and decoding processes are described in detail.

Fig. 9 is a block diagram showing a turbo encoder that is a related technique. A turbo code that is one type of an error correction code is standardized by 3GPP (TS-25 Series, 25.212, Release 6, Version 6.9.0), and a turbo encoder is configured by combining a plurality of component encoders and an interleaver. In the configuration example depicted in Fig. 9, two component encoders of the same type are provided. First and second component encoders are denoted as component encoders <1> and <2> respectively in order to make a distinction between the two encoders.

To the two component encoders, a convolutional code of a feedback type is input. Information bits are input to the component encoder <1> in their original order unchanged, whereas a bit string the order of which is changed by interleaving the information bits through an interleaver (n) 108 is input to the component encoder <2>. By passing the input bits through the component encoders depicted in Fig. 9, a bit shift is made to the input bits, and parity bit sequences <1> and <2> are output from the component encoders <1> and <2> respectively. Coded bits are obtained by serially merging these parity bit sequences and the information bits, namely, a systematic bit sequence.

Note that the turbo encoder is not limited to the configuration depicted in Fig. 9, and can be modified in a variety of ways. For example, coded bits may be defined not to include information bits, and the coded bits may be defined as a non-systematic code. Also the type of the component encoders is not limited to that of the component encoders depicted in Fig. 9. Additionally, the number of component encoders may be three or more. In this case, bit strings that are respectively input to the component encoders are defined to be bit strings of mutually different interleave patterns generated by being made to pass through different interleavers. In addition, the number of memories, or a generation polynomial can be changed for the component encoders. Moreover, it is not necessary that input bits themselves are information bits, and also turbo coding can be made to an input bit that is a symbol of a mass of a plurality of bits.

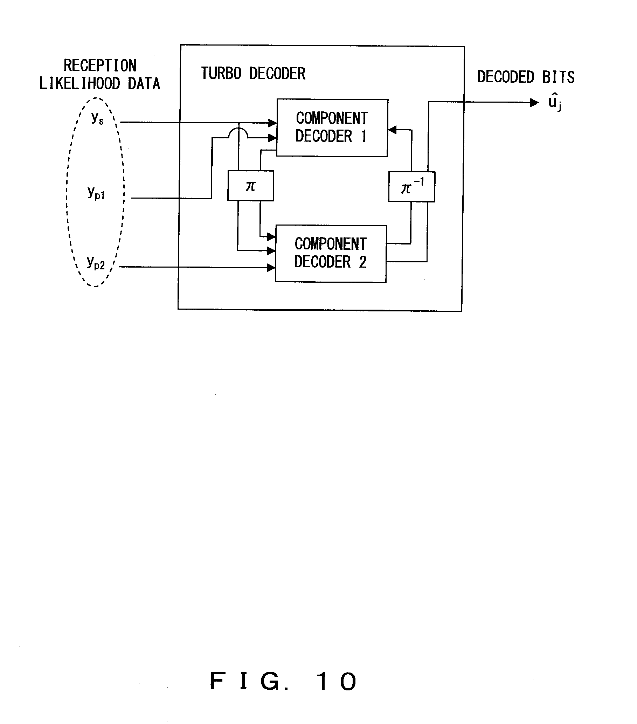

Fig. 10 is a block diagram depicting a turbo decoder that is a related technique. The turbo decoder includes component decoders the number of which is the same as that of the component encoders of the turbo encoder. The turbo decoder depicted in Fig. 10 is provided correspondingly to the turbo encoder depicted in Fig. 9, and is configured by including two component decoders (component decoders <1> and <2>).

The likelihood data of a systematic bit sequence and the likelihood data of the parity bit sequence 1 among coded bits are input to the component decoder <1>, whereas the likelihood data of the interleaved systematic bit sequence and the likelihood data of the parity bit sequence are input to the component decoder <2>. The likelihood data is considered to be probability information for estimating a transmission bit sequence transmitted from the transmitter to the receiver. Therefore, posteriori probability is obtained by performing a conditional probability arithmetic operation on the basis of priori probability after obtaining the priori probability based on reception likelihood data in each of the component decoders.

In the turbo decoder depicted in Fig. 10, an arithmetic operation is initially started at the component decoder <1> to obtain posteriori probability. The obtained posteriori probability is interleaved and input to the component decoder <2>, and used as extrinsic information for obtaining priori probability in the component decoder <2>. In the component decoder <2>, the obtained posteriori probability is deinterleaved, which is used as the extrinsic information of the component decoder <1>. As described above, the estimation accuracy of posteriori likelihood is improved by feeding back the posteriori probability obtained in one of the component decoders to the other, and by repeating the arithmetic process in the component decoders <1> and <2> as needed.

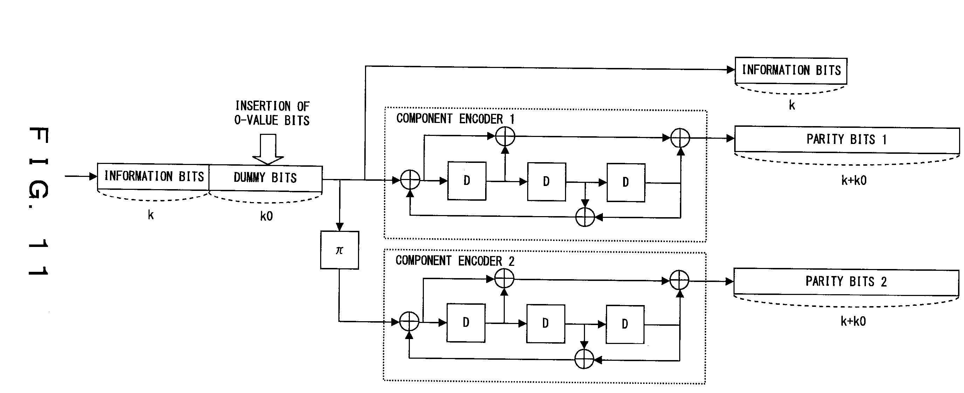

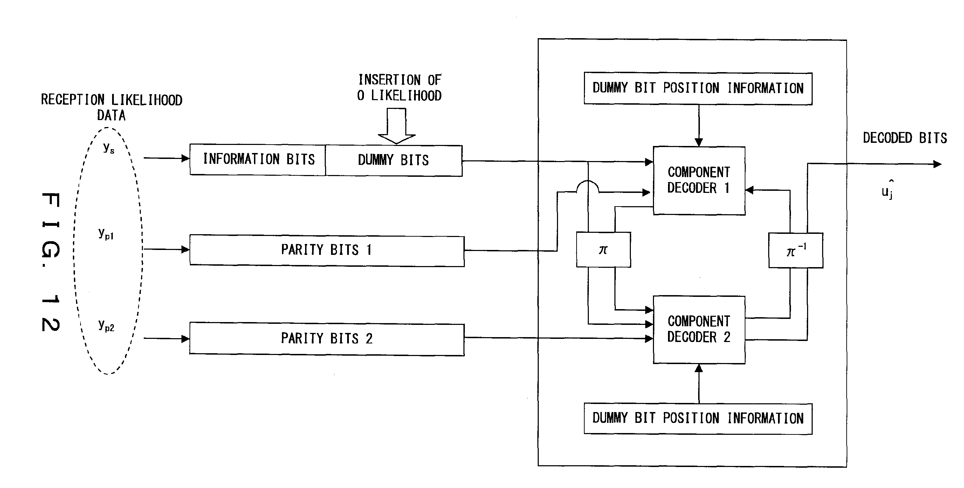

In the meantime, encoding methods include a dummy bit insertion method (or a shortened code method) (for example, the international publication pamphlet No. WO 06/075417). With this method, a code with a coding rate R (<R0) that is lower than the coding rate R0 of a given mother code C0 is obtained by inserting dummy bits, coding bits, and removing the inserted dummy bits from the coded bits. With this method, a code with a more preferable error rate characteristic can be obtained, compared with a method for obtaining a code with the same coding rate by executing a repetition process in comparison. The process of the shortened code method is described below with reference to Figs. 11 and 12. Here, the process executed in a case where a 3GPP turbo code with a coding rate R0 of 1/3 is used as a mother code is taken as an example and described.

Fig. 11 is a block diagram depicting a turbo encoder having a configuration for making coding with the dummy bit insertion method. Here, assume that an information bit length and a dummy bit length are k and k0 respectively. At this time, a parity bit length is represented as m=2(k+k0) because two component encoders are provided in this configuration. Assume that the bit length of a coded bit sequence resulting from coding is n=3k+2k0, and a coding rate R is k/n (<R0: the coding rate R0 of a turbo code is 1/3) in the following description.

Initially, known dummy bits of the length k0 are serially merged with the information bits. The dummy bits are arbitrarily set, and all of them are set, for example, to 0. The dummy bit length k0 is given by the following equation (1).

$$k0=k\times(1/R-1/R0)/(1/R0-1) \qquad (1)$$

In Fig. 11, the information bits (bit length k) and the dummy bits (bit length k0) are depicted by being separated in the first and the 1-ast halves of the bit string. Generally, however, information bits and dummy bits are arranged to mixedly exist in a bit string.

Next, coding using the mother code is made to the generated code block (of a bit length of k+k0). Details of the process executed here are as described above with reference to Fig. 9. Lastly, the dummy bit sequence is removed from the systematic bits within the obtained coded bit sequence. Here, the arrangement of the dummy bit sequence within the coded bit sequence is calculated by using the known position information of the dummy bits among the systematic bits.

Fig. 12 is a block diagram depicting a turbo decoder having a configuration for making decoding with the dummy bit insertion method. Assume that the insertion positions and the values of a dummy bit sequence are known in the turbo decoder shown in Fig. 12. A decoding process is described by taking as an example the case where all the values of the dummy bit sequence are set to 0.

If the insertion positions of the dummy bit sequence within the coded bit sequence are known, reproduction can be made based on control information received from the transmitter similar to the rate matching process that is a known technique. A reception likelihood data sequence is generated by inserting a likelihood of a value of 0 in positions, in which dummy bits are to be inserted, in reception likelihood data similar to depuncturing. The generated reception likelihood data sequence is input to the turbo decoder, which in turn executes the decoding process for the turbo code that is a mother code. The turbo decoding process is as described with reference to Fig. 10. Here, for a MAP (Maximum A Posteriori Probability) arithmetic operation of each component decoder, the known position information of dummy bits, and the probability being 1 that the values of the bits are 0 are used. Additionally, since the posteriori likelihood of dummy bits is not required to be fed back, a value of 0 is set as the posteriori likelihood of dummy bits.

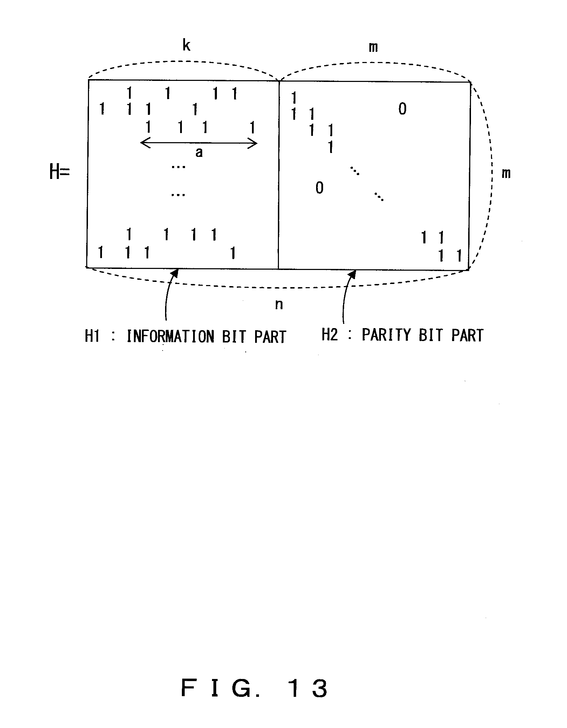

An LDPC coding can be cited as another coding method. The LDPC coding is described with reference to Figs. 13 to 15.

Fig. 13 represents an example of an LDPC matrix. The parity check matrix H represented in Fig. 13 is composed of m rows and n(=k+m) columns. Binary matrix elements for coding an information bit are arranged in the first to the k-th columns, and those for coding a parity bit are arranged in the (k+1)-th to the m-th columns. These binary matrix elements are referred to as an information bit part $H_1$ and a parity bit part $H_2$ respectively in the following description. Assume that "0" is set as matrix elements in the blank portion in Fig. 13.

a (a=4 in the example represented in Fig. 13) matrix elements take the value of 1 in each column, and the matrix elements that take the value of 1 are distributed in a non-uniform manner in the information bit part $H_1$. In contrast, the matrix elements form a triangular matrix in the parity bit part $H_2$.

Generally, coding is obtained with the following equation (2) by using a generation matrix G in accordance with a method for coding a block code. In the equation (2), "u" represents an information bit vector of a size k, "c" represents a code bit vector of a size n, and "G" is a matrix of a size kxn. A matrix arithmetic operation is a logical operation using the product sum of binary numbers of 0 and 1.

$$c=uG \quad (2)$$

where the matrix G has the following relationship with the above described parity check matrix H.

$$GH^T=0 \quad (3)$$

Generally, the matrix G that satisfies the equation (3) must be obtained based on the check matrix H. However, the matrix G can be easily obtained in some cases by devising the definition of the check matrix H. The check matrix H represented in Fig. 13 is its example. Considering that the check matrix H represented in Fig. 13 is a systematic code composed of the information bit part $H_1$ and the parity bit part $H_2$ as described above,

$$H_2^{-1}H=[H_2^{-1}H_1 I]=[P I] \quad (4)$$

Accordingly, the following equation (5) is obtained. "I" in the equations (4) and (5) is a unit matrix.

$$G=[I P^T]=[I H_1^T (H_2^{-1})^T] \quad (5)$$

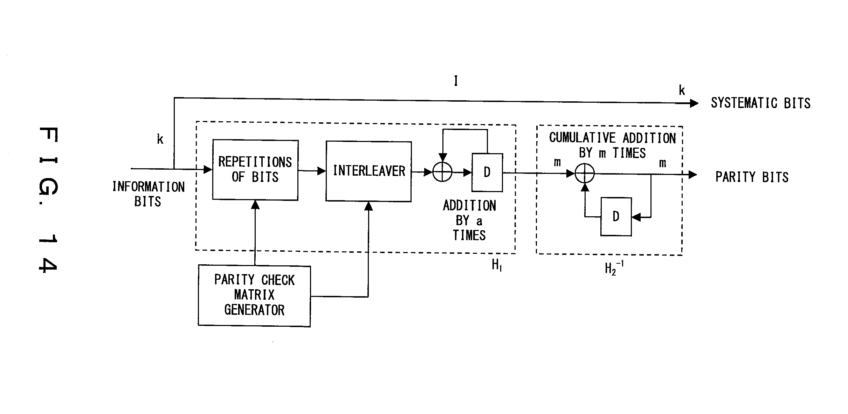

The above described code is called an IRA (Irregular Repeat Accumulate) code. A configuration of an IRA encoder is depicted in Fig. 12. With the IRA encoder depicted in Fig. 14, the matrix G can be obtained by repeating and interleaving bits, and executing a cumulative addition process.

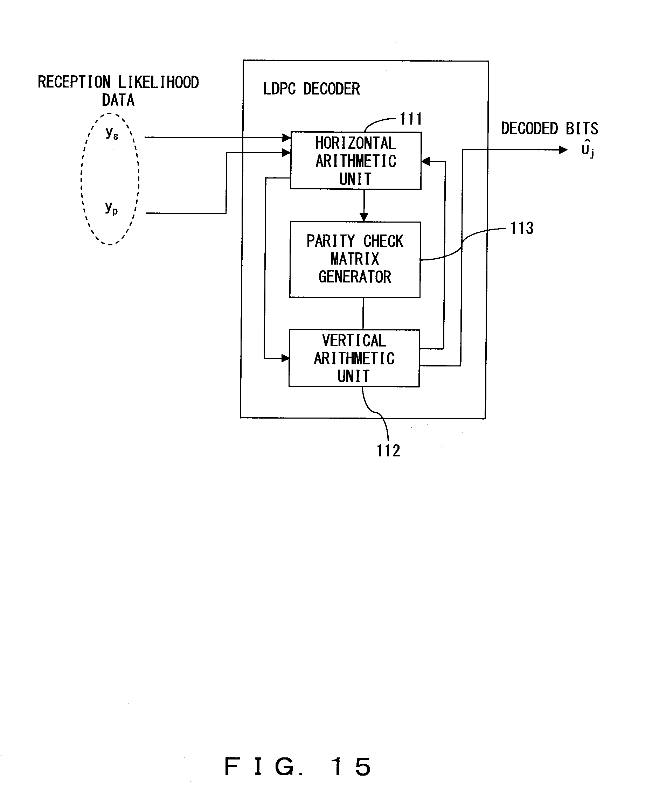

Fig. 15 is a block diagram depicting an LDPC decoder. The above described arbitrary code bit vector c satisfies the following parity check relational expression based on the equations (2) and (3). The following equation (6) represents the following m relational expressions for the information bits u and the parity bits p.

$$cH^{T}=0 \quad (6)$$

In the decoder depicted in Fig. 15, the likelihood data of systematic bits and parity bits are input to a horizontal arithmetic unit 111, and posteriori probability is obtained. The posteriori probability obtained by the horizontal arithmetic unit 111 is given to a vertical arithmetic unit 112 as priori probability, and the posteriori probability is obtained. In the horizontal arithmetic unit 111, a conditional probability is obtained from other bits by using the check matrix H generated by a parity check matrix generator 113, and the parity check relational expression represented by the above equation (6). In the vertical arithmetic unit 112, results obtained from the plurality of parity check relational expressions are multiplexed. Namely, these processes correspond to those of the component decoders <1> and <2> in the above described turbo encoder. Thereafter, the arithmetic operations are repeated by feeding back to each other the posteriori probability respectively obtained in the arithmetic units, and by repeating the arithmetic operations, whereby desired information bits (decoded bits) u are obtained similar to the turbo decoding process.

As the technique for making a communication in a recdiver in accordance with control information that is notified from the transmitter to the receiver, for example, HARQ (Hybrid Automatic Repeat reQuest) can be cited in addition to the above describedAMC. HARQ is a control method implemented by combining an automatic retransmission control (ARQ) method and error correction coding (FEC: Forward Error Correction). An HARQ process that is a related technique is described below.

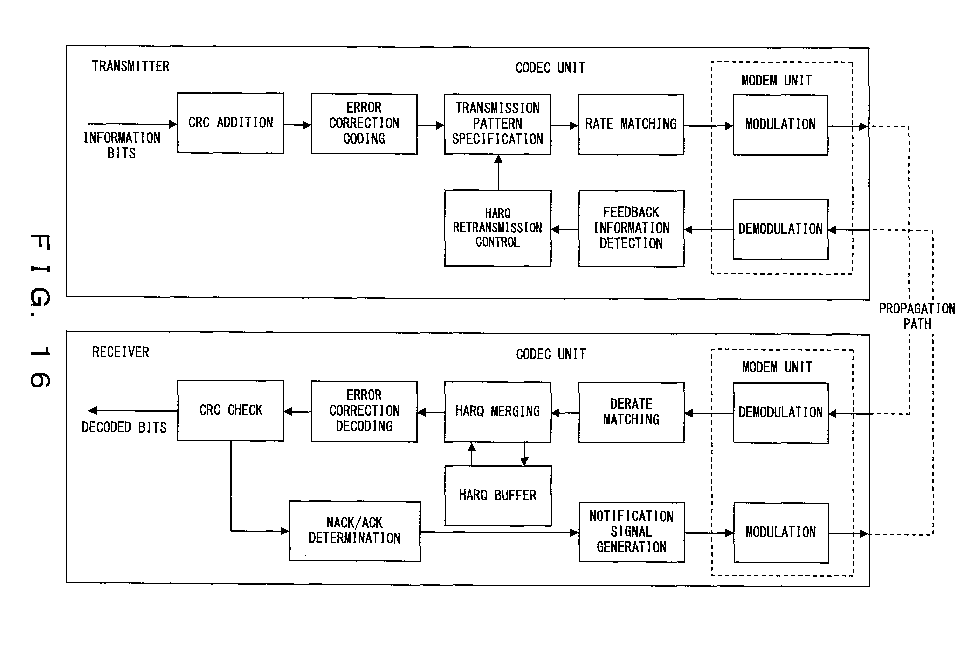

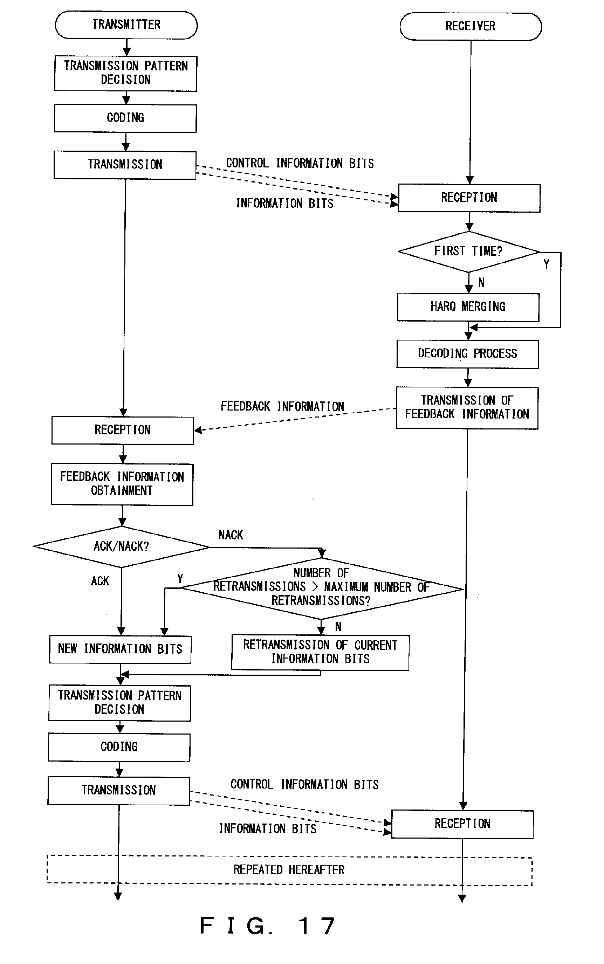

Fig. 16 is a block diagram depicting a transmitter and a receiver, which have an HARQ function. Fig. 17 is a flowchart representing data transmission and reception processes. The receiver executes a decoding process for a block (packet) of information bits in accordance with a specified coding scheme. If the received block is determined to be a block error as a result of the decoding process, the received signal that is determined to be the error is stored in a buffer, and a retransmission request (NACK) is issued to the transmitter.

The transmitter that receives an ACK/NACK notification signal (feedback information) executes coding and modulation processes for a new packet and transmits the packet if the received signal is ACK. If the signal received from the receiver is NACK, the transmitter retransmits part or the whole of coded data. Upon receipt of the retransmitted data, the receiver merges the data stored in the buffer and the retransmitted data, and executes the decoding process for the merged data recognized as the reception data of one code block.

When the above described processes are repeated and the number of retransmissions of data from the transmitter to the receiver reaches a predetermined maximum number of retransmissions, the existing packet is discarded, and the transmission of a new packet is started with the above described procedures.

Note that the above described SCWRC and PARC can be applied to HARQ. If a coded block is transmitted/received with PARC, a retransmission control is performed for each transmission/reception antenna.

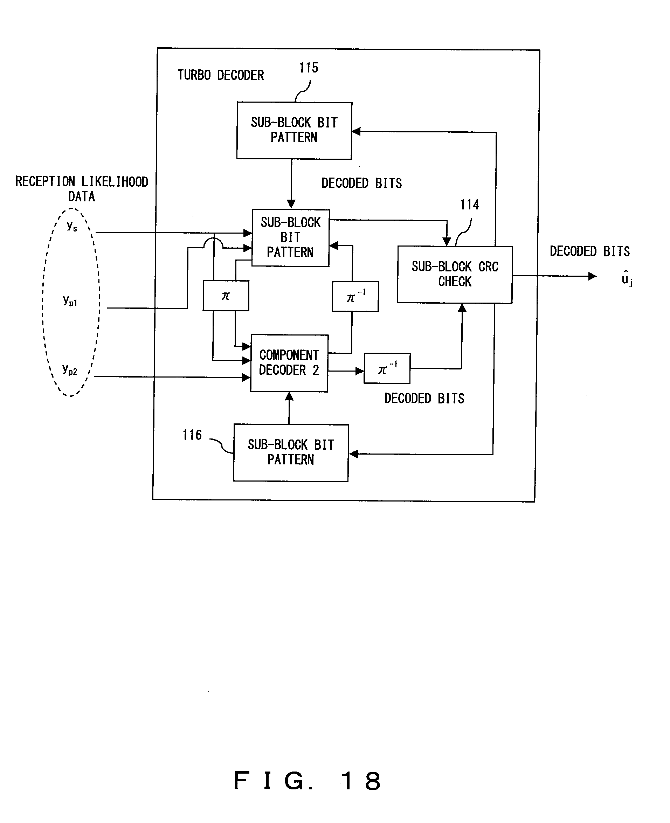

Fig. 18 is a block diagram depicting a turbo decoder for decoding coded bits obtained by serially merging and coding a plurality of code blocks. Fundamental operations of the turbo decoder are as described above with reference to Fig. 10.

As stated earlier, the positions of CRC parity bits among coded bits are known. Therefore, CRC checking is made by extracting a CRC parity bit included in each sub-block every time the decoding process is repeated. In the example of the coded bits depicted in Fig. 8, CRC checking is made for s0 and s1 respectively. Bits included in a sub-block that is determined to be error-free can be handled as known bits.

Information about the values and the positions of bits of a sub-block from which an error is not detected by a sub-block CRC checking unit 114 is held in sub-block bit pattern units 115 and 116. Component decoders respectively execute the decoding process after inserting the value of a bit, which can be handled as a known bit, in a predetermined position based on the information held in the sub-block bit pattern units 115 and 116. When all of sub-blocks become error-free, the process is terminated. The process for inserting a known bit can be implemented with the above described dummy bit decoding method.

The description has been provided by taking the turbo code as an example here. However, a similar decoding process can be executed also for an LDPC code by using the known position of a CRC parity bit.

<first embodiment>

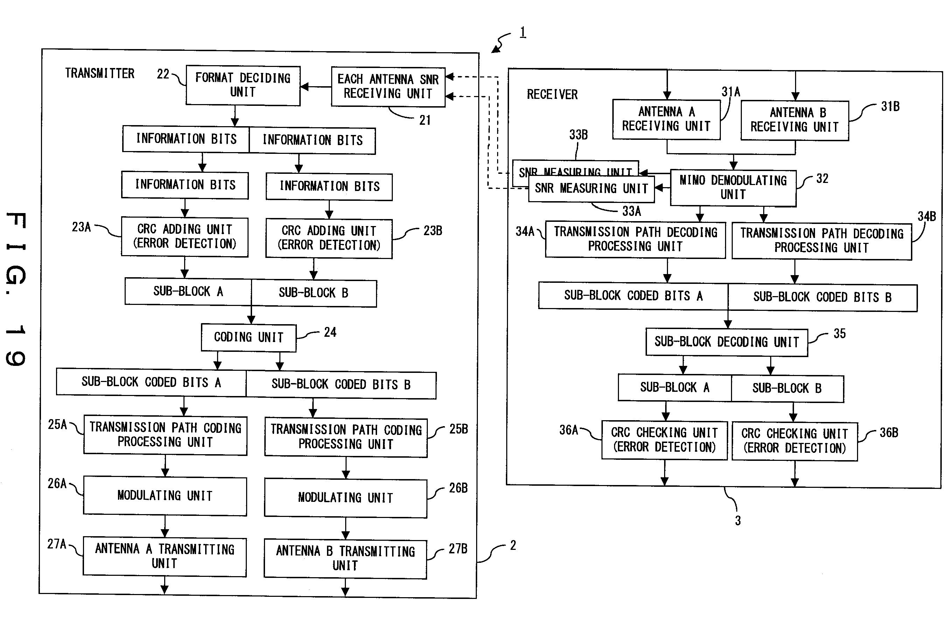

Fig. 19 is a block diagram depicting a communications system according to a first embodiment. In the communications system 1, a transmitter 2 and a receiver 3 are connected via a wireless network. The communications system 1 is configured, for example, with a third-generation wireless communications system, or a wireless communications system that corresponds to the next-generation HSDPA, LTE (Long Term Evolution), etc. Here, the transmitter 2 and the receiver 3 are AMC transmitter and receiver respectively. The case where the transmitter 2 and the receiver 3 have two antennas respectively and make a spatial multiplexing transmission for AMC information bits by using MIMO is described.

The transmitter 2 is configured by including SNR receiving units 21, a format deciding unit 22, CRC adding (error detecting) units 23, a coding unit 24, transmission path coding processing units 25, modulating units 26, and antenna transmitting units 27.

The receiver 3 is configured by including antenna receiving units 31, a MIMO demodulating unit 32, SNR measuring units 33, transmission path decoding processing units 34, a sub-block decoding unit 35, and CRC checking (error detecting) units 36.

The constituent elements of the transmitter 2 are initially described.

Each of the SNR receiving units 21 receives SNR information from the receiver 3. The SNR information includes a signal-to-noise ratio (SNR) transmitted from the antenna of the receiver 3. The format deciding unit 22 decides a scheme composed of a coding/decoding method, a modulation/demodulation method, and a bit length of information bits, which are to be used in a communication with the receiver 3, on the basis of the SNR information received by the SNR receiving unit 21. The scheme is decided for each antenna.

Each of the CRC adding units 23 adds an error detection code (CRC) to information bits to be transmitted to the receiver 3. Here, the information bits are set by the format deciding unit 22 for each antenna. Therefore, a plurality of CRC adding units 23 are provided correspondingly to the number of antennas. Fig. 19 depicts the configuration where the two CRC adding units 23A and 23B are provided. The coding unit 24 serially merges and collectively codes sub-blocks that are obtained by adding an error detection code respectively in the CRC adding units 23A and 23B. Here, a sub-block is defined to be an information bit block that is obtained by adding an error detection code to information bits decided for each antenna. Additionally, the coding unit 24 depicted in Fig. 19 is assumed to be configured with a turbo encoder.

Each of the transmission path coding processing units 25 executes a process such as rate matching, etc. in accordance with the bandwidth of a transmission path, the nature of noise, etc. for sub-block coded bits, which are acquired by splitting coded bits obtained by being collectively coded by the coding unit 24, respectively for the antennas.

Here, the sub-block coded bits are defined to be bits obtained by extracting coded bits transmitted from each antenna from among coded bits obtained by serially merging and coding a plurality of sub-blocks. Each of the modulating units 26 puts a digital signal output from each of the transmission path coding processing units 25 on a carrier wave. Each of the antenna transmitting units 27 transmits the carrier wave modulated by the digital signal.

In the configuration represented in Fig. 19, the two transmission path coding processing units 25, the two modulating units 26, and the two antenna transmitting units 27 are respectively provided to transmit sub-block coded bits for each transmission system. In Fig. 19, they are denoted with the reference numerals to which A and B are appended respectively.

The constituent elements of the receiver 3 are described next.

Each of the antenna receiving units 31 receives a carrier wave transmitted from the transmitter 2. The antenna receiving units, the number of which corresponds to that of antennas, namely, two antenna receiving units 31A and 31B are provided in the example depicted in Fig. 19. The MIMO demodulating unit 32 demodulates a received modulation carrier wave. Each of the SNR measuring units 33A and 33B measures the SNR of received data, and transmits the SNR information to the transmitter 2. In the example depicted in Fig. 19, the two SNR measuring units 33 are provided correspondingly to the number of transmission streams.

Each of the transmission path decoding processing units 34 decodes a signal that is extracted from the carrier wave with the MIMO demodulation. Here, the two transmission path decoding processing units 34 are provided and denoted with the reference numerals to which A and B are appended respectively. With the transmission path decoding process, sub-block coded bits A and B are output from the transmission path decoding processing units 34A and 34B respectively.

The sub-block decoding unit 35 obtains sub-blocks A and B by executing a decoding process for the sub-block coded bits A and B. Each of the CRC checking units 36 checks whether or not a code error exists based on an error correction code within each of the sub-blocks. The two CRC checking units 36 are provided in the example depicted in Fig. 19.

With the communications system 1 depicted in Fig. 19, the receiver 3 initially measures the SNR of a stream of each transmission antenna in AMC, and notifies the transmitter 2 of the SNR. The transmitter 2 selects MCSes for the antennas A and B of the transmitter 2 based on the SNR. Similar to the conventional technique, the MCSes are composed of an information length, a modulation method, and a coding rate respectively, and assumed to be (k1,mod1,R1) and (k2,mod2,R2) respectively for the antennas A and B. The sub-blocks A and B are generated by adding a CRC parity bit to information bits that respectively correspond to the MCSes. Coded bits are obtained by making a turbo coding of an information bit length of (k1+k2) after serially merging the sub-blocks A and B. Then, the sub-block coded bits A and B are generated by extracting the bits respectively transmitted from the antennas A and B from among the coded bits. Upon receipt of the sub-block coded bits A and B respectively via the antennas, the receiver 3 obtains information about the MCSes by extracting the information bits from the sub-block coded bits. In a subsequent communication, the receiver 3 executes the decoding and the demodulating processes in accordance with the MCSes notified from the transmitter 2.

The sub-block coding and decoding processes are described next.

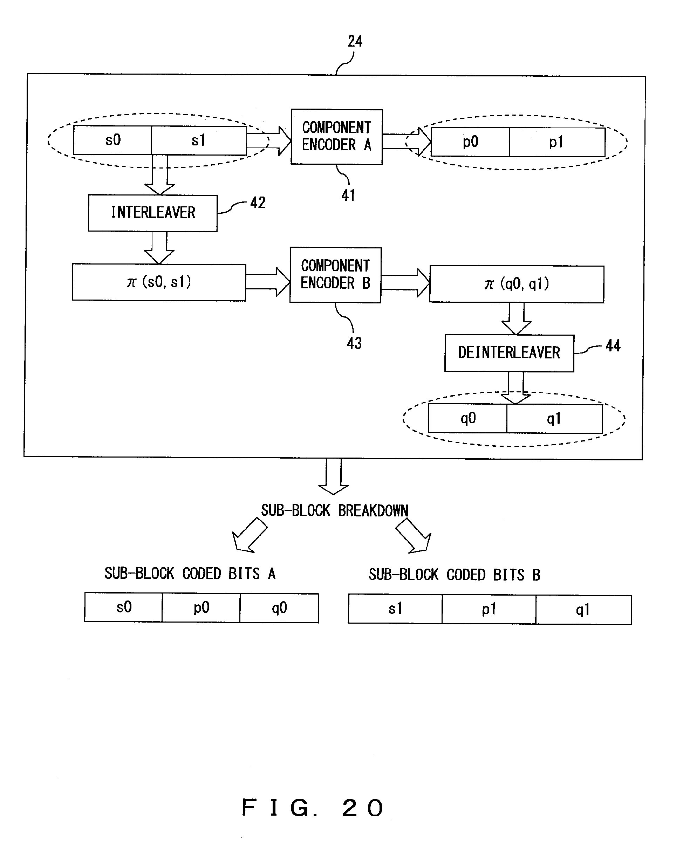

Fig. 20 is a schematic diagram for explaining the operations of the coding unit 24 according to the first embodiment. The coding unit 24 is configured with a turbo encoder as described above, and includes a component encoder <A> 41, an interleaver 42, a component encoder <B> 43, and a deinterleaver 44. Fundamental operations of these constituent elements are implemented with the conventional techniques and as described above. Therefore, their details are omitted. Here, a method for obtaining coded bits by collectively coding the sub-blocks A and B is described.

The information bits s0 and s1 of the sub-blocks A and B are input to the coding unit 24 as systematic bits. A parity bit sequence 1 is obtained by passing a systematic bit sequence, which is obtained by serially merging the bit strings s0 and s1, through the component encoder <A> 41. Bit strings p0 and p1, which configure the parity bit sequence 1, correspond to the systematic bits s0 and s1 respectively.

In the meantime, a bit string n (s0, s1) where the order of bits is changed by passing the systematic bit sequence through the interleaver 42 is obtained. By passing the obtained bit string n (s0, sl) through the component encoder <B> 43, a bit string n (q0, q1) is output. A parity bit sequence 2 is obtained by passing the bit string n (q0, q1) through the deinterleaver 44 to restore the order of bits to the original order. Bit strings q0 and q1, which configure the parity bit sequence 2, correspond to the systematic bits s0 and s1 respectively.

In the coding unit 24, the timing at which systematic bits are input to each of the component encoders is controlled. Therefore, parity bits that correspond to s0 and s1 of the systematic bit sequence are output from the two component encoders 41 and 43 respectively. By using these outputs, the bit strings s0, p0 and q0 are serially merged by being recognized as bit strings that configure the sub-block coded bits A to be transmitted from the same antenna. Similarly, the bit strings s1, p1 and q1 are serially merged by being recognized as bit strings that configure the sub-clock coded bits B.

For the sub-block coded bits A and B obtained with the above describedprocess, the transmission path coding processing units 25 execute the rate matching process. The modulating units 26 modulate these bits, which are then transmitted from the antenna transmitting units 27 to the receiver 2 via a control channel.

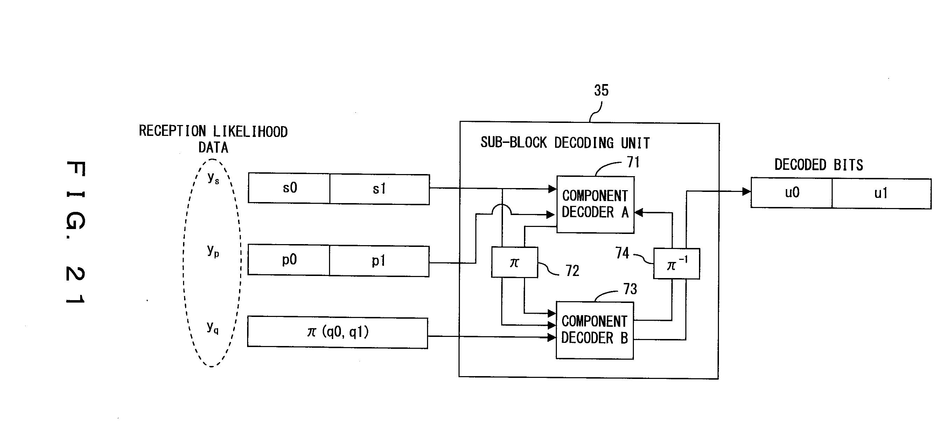

Fig. 21 is a schematic diagram for explaining the operations of the sub-block decoding unit 35 according to the first embodiment. The sub-block decoding unit 35 is configured with a turbo decoder, and includes a component decoder <A> 71, an interleaver 72, a component decoder <B> 73, and a deinterleaver 74. Fundamental operations of the constituent elements of the sub-block decoding unit 35 are implemented with the conventional techniques and as described above. Therefore, their details are omitted. Here, a method for merging and decoding sub-block coded bits for each antenna is described.

To the component decoder <A> 71 of the sub-block decoding unit 35, the likelihood data of the systematic bit sequence and the parity bit sequence 1 are input. To the component decoder <B> 73, the likelihood data of the interleaved systematic bit sequence and the parity bit sequence 2 are input. The likelihood data of the sub-block coded bits A and B can be generated with the MIMO demodulation process.

As a result, decoded bits u0 and u2 that are received respectively via the antenna receiving units 31A and 31B can be obtained from among decoded bits output from the sub-block decoding unit 35.

As described above, with the communications system 1 according to this embodiment, information bits that are assigned respectively to the antennas are merged and coded not respectively but collectively when being coded and transmitted. By increasing a coding length, the error rate characteristic is improved, leading to improvements in the throughput.

<second embodiment>

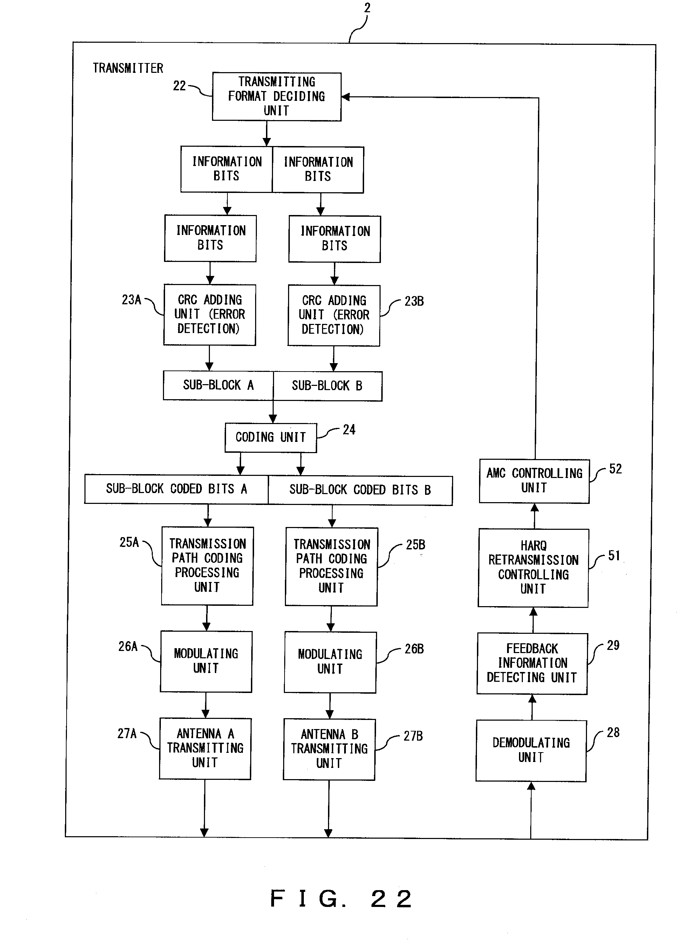

Fig. 22 is a block diagram depicting a transmitter 2 according to the second embodiment. The transmitter 2 according to this embodiment has an HARQ function in addition to the above described AMC function. With the HARQ function, the transmitter 2 executes a retransmission process for sub-block coded bits in response to a retransmission request issued from the receiver 3.

Constituent elements, which are similar to those of the transmitter 2 according to the first embodiment, in the configuration of the transmitter 2 depicted in Fig. 22 are denoted with the same reference numerals, and their explanations are omitted here. Similar constituent elements are denoted with the same reference numerals also in the drawings referenced below and their explanations. Compared with the transmitter according to the above embodiment, the transmitter 2 according to the second embodiment is different in including a demodulating unit 28, a feedback information detecting unit 29, an HARQ retransmission controlling unit 51, and an AMC controlling unit 52. The demodulating unit 28 is provided in the receiver depicted in Fig. 19. However, since this unit is not required to explain the transmitter 2 according to the first embodiment, it is not depicted.

The demodulating unit 28 demodulates a carrier wave on which ACK/NACK information notified from the receiver 3 is put. Here, the ACK/NACK information is information for feeding back to the transmitter 2, which is the transmitting side of MCS, whether or not the reception of MCS notified from the transmitter 2 to the receiver 2 is determined to be acknowledged. This information is hereinafter referred to as "feedback information" in the following description.

The feedback information detecting unit 29 detects feedback information from a demodulated signal. The HARQ retransmission controllingunit 51 performs a control for causing sub-block coded bits to be retransmitted when necessary based on the detected feedback information, namely, contents (ACK or NACK) of the response received from the receiver 3. The HARQ retransmission controlling unit 51 actually controls the transmission path coding processing units 25A and 25B although Fig. 22 is depicted by being simplified.

The AMC controlling unit 52 controls AMC based on the contents of the control performed by the HARQ retransmission controlling unit 51. The format deciding unit 22 decides the contents of information to be transmitted from each antenna under the control of the AMC controlling unit 52. In this embodiment, information decided by the format deciding unit 22 includes information about a retransmission control in addition to the above described MCS. The information about a retransmission control includes, for example, information about the number of retransmissions, and the like. These items of information are notified to the receiver 3 via a control channel.

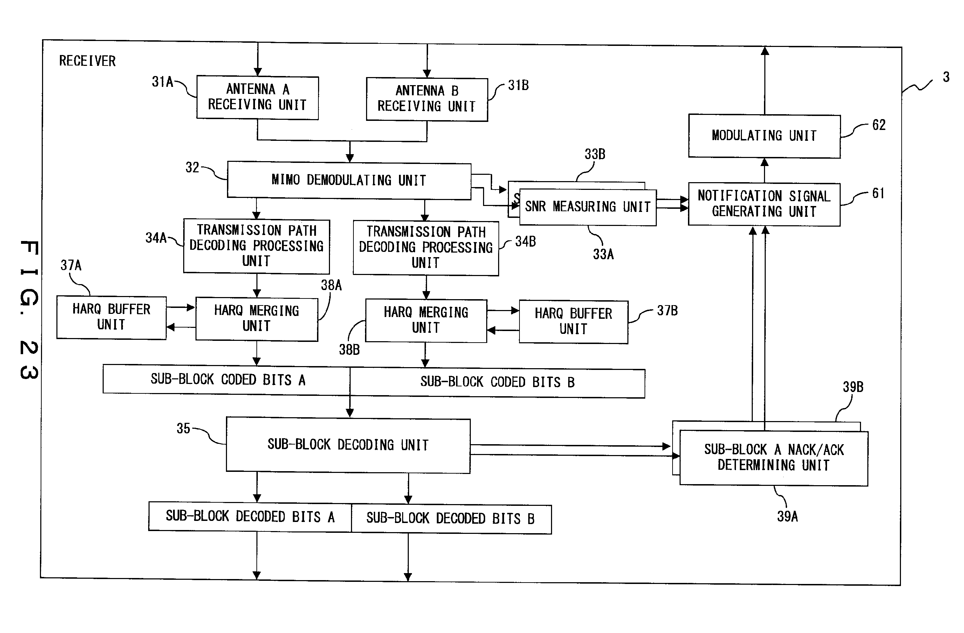

Fig. 23 is a block diagram depicting a receiver 3 according to the second embodiment. Compared with the receiver according to the above embodiment, the receiver 3 according to this embodiment is different in including HARQ buffer units 37, HARQ merging units 38, sub-block determining units 39, a notification signal generating unit 61, and a modulating unit 62. The modulating unit 62 is also provided in the receiver depicted in Fig. 19. However, since this unit is not required to explain the receiver 3 according to the first embodiment, it is not depicted.

Each of the HARQ buffer units 37 temporarily holds the likelihood data of sub-block coded bits from which an error is detected as a result of CRC checking. Each of the HARQ merging units 38 merges the likelihood data of sub-block coded bits, which is held in the HARQ buffer unit 37 and from which the error is detected, and the likelihood data of retransmitted sub-block coded bits.

Each of the sub-block determining units 39 determines whether or not an error exists based on the value of the CRC parity bit of a sub-block obtained by executing the decoding process in the sub-block decoding unit 35. The notification signal generating unit 61 generates a signal for making a notification to the transmitter 2. The signal generated by the notification signal generating unit 61 includes information about HARQ in addition to MCS. Namely, a signal for notifying the transmitter 2 of ACK is generated if the result of the determination made by the sub-block determining unit 39 is "no error", or a signal for notifying the transmitter 2 of NACK if the result of the determination made by the sub-block determining unit 39 is "error exists". The modulating unit 62 modulates the signal generated by the notification signal generating unit 61, and transmits the modulated signal to the transmitter 2.

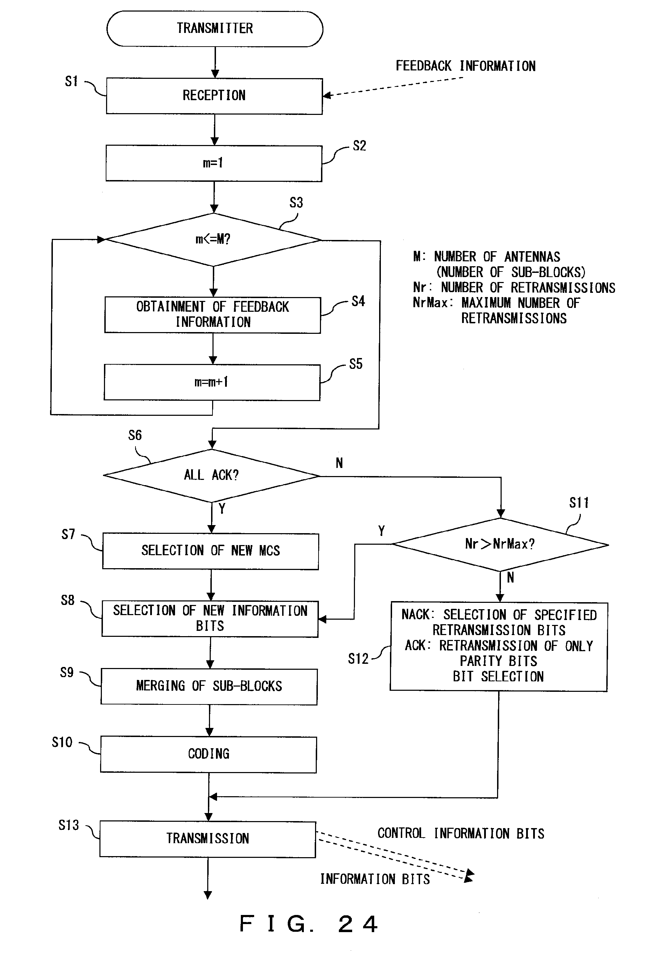

Fig. 24 is a flowchart representing a retransmission control process to which HARQ is applied in the transmitter 2 according to the second embodiment. The retransmission control process of the transmitter 2 according to this embodiment is specifically described with reference to Fig. 24.

Initially, in step S1, feedback information is received from the receiver 3. Then, in step S2, the value of a sub-block number counter m is initialized to 1. In step S3, it is determined whether or not the value of the sub-block number counter m is equal to or smaller than the number of antennas M. If the value of the sub-block number counter m is determined to be equal to or smaller than the number of antennas M, the process goes to step S4, in which the feedback information of the sub-block corresponding to the value of the sub-block counterm is obtained. Upon completion of obtaining the feedback information, the sub-block number counter m is incremented by 1 in step S5, and the process goes back to the determination of step S3. If the value of the sub-block number counter m exceeds the number of sub-blocks M in step S3, the feedback information of received sub-blocks is determined to have been obtained. Then, the process goes to step S6.

In step S6, it is determined for the feedback information respectively extracted from the sub-blocks whether or not all of results of CRC checking made in the receiver 3 are "ACK". If all of the results of CRC checking, which are returned from the receiver 3, are "ACK", the process goes to step S7, in which an optimum MCS is newly selected for each antenna. Then, in step S8, information bits corresponding to the selected MCS are respectively selected. In step S9, the plurality of sub-blocks are serially merged. Then, in step S10, the merged sub-blocks are collectively coded. Lastly, the coded bits are transmitted in step S13, and the process is terminated. The bits transmitted in step S13 include the information bits corresponding to MCS, and control information bits related to HARQ as described above.

In the meantime, if NACK is included in the feedback information in step S6, the process goes to step S11, in which it is determined whether or not the value of a retransmission number counter Nr for counting the number of retransmissions is larger than a preset maximum number of retransmissions NrMax. If the value of the retransmission number counter Nr is determined to be larger than NrMax, namely, if the number of retransmissions is determined to exceed the maximum number of retransmissions NrMax, the process goes to step S8 to execute a transmission process for information bits to be transmitted next. Subsequent processes are as described above.

If the value of the retransmission number counter Nr is determined to be smaller than the maximum number of retransmissions NrMax in the determination of step S11, the process goes to step S12. In step S12, a sub-block is retransmitted from the antenna that receives NACK as a response, and retransmission bits composed of only parity bits are transmitted from the antenna that receives ACK as a response. The reason why information bits are not included as a sub-block in response to ACK is that the information bits are determined to be error-free as a result of CRC checking made in the receiver 3, and the positions and the values of the information bits can be handled as known information in the sub-block decoding unit of the receiver 3 in accordance with the known technique. After selecting retransmission bits for each sub-block, the process goes to step S13, in which the selected bits are transmitted. Then, the process is terminated.

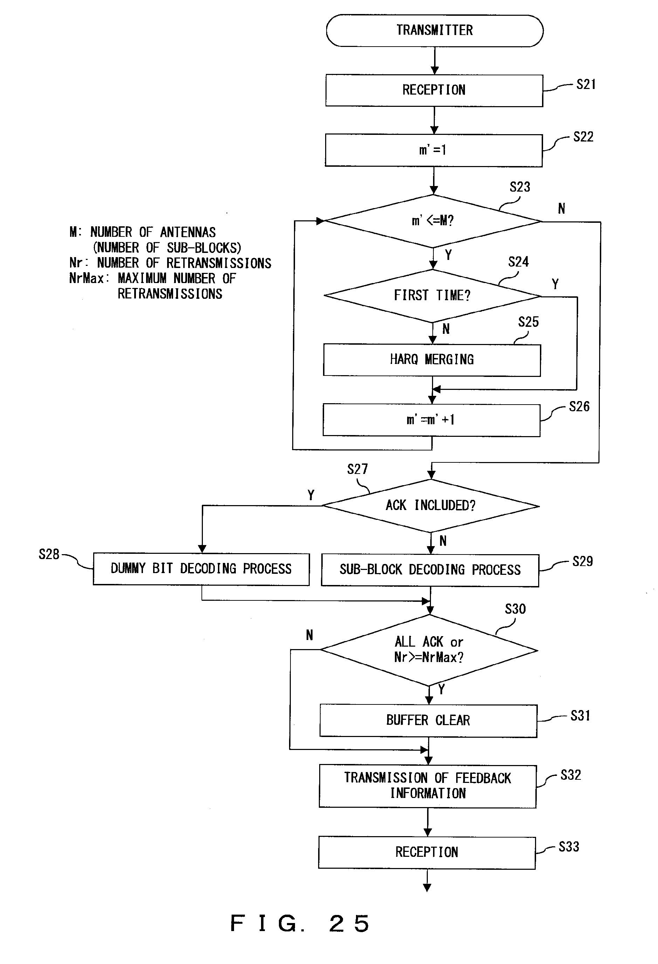

Fig. 25 is a flowchart representing a retransmission control process to which HARQ is applied in the receiver 3 according to this embodiment. The retransmission control process of the receiver 3 according to this embodiment is specifically described with reference to Fig. 25.

Initially, the antennas respectively receive data transmitted from the transmitter 2 in step S21. Then, in step S22, a sub-block number counter m' for counting the number of antennas of the receiver 3 is initialized to 1. In step S23, it is determined whether or not the value of the sub-block number counter m' is equal to or smaller than the number of sub-blocks M of the receiver 3. If the value of the sub-block number counter m' is determined to be equal to or smaller than the number of sub-blocks M, the process goes to step S24, in which it is further determined whether or not the reception of data of the sub-block indicated by the counter m' is the first time in the receiver 3. If the reception is determined to be the first time, the process goes to step S26 without performing any operations. In the meantime, if the data received in step S21 is retransmitted data, the process goes to step S25, in which an HARC merging process is executed. Then, the process goes to step S26, in which the sub-block number counter m' is incremented by 1. The process then goes back to step S24. The HARQ merging process of step S25 is a known technique, which merges retransmitted data and data held in the buffer.

If the value of the sub-block number counter m' exceeds the number of sub-blocks M in step S23, the HARQ merging is determined to have been made for data to be processed. Then, the process goes to step S27.

In step S27, it is determined whether or not the feedback information of data received prior to that received in step S21 includes ACK. As the information of ACK/NACK referenced here, the results of CRC checking made at the time of the prior reception of the data are held, and referenced when the determination of step S27 is made for the data received next. If the held ACK/NACK information includes ACK, the data is determined to include error-free bits. The determination of step S27 is made for each sub-block.

If the feedback information is determined to include ACK in step S27, the process goes to step S28, in which bits that are previously determined to be error-free are handled as known bits, dummy bits are inserted in the positions of the bits, and the decoding process is executed by the sub-block decoding unit 35.

In the meantime, if the feedback information is determined not to include ACK in step S27, the process goes to step S29, in which the sub-block decoding process is executed by using the merged data.

In step S30, whether or not a condition of whether all of pieces of ACK/NACK information (feedback information) to be transmitted to the transmitter 2 are ACK, and a condition of whether the value of the retransmission number counter Nr exceeds the maximum number of retransmissions NrMax are satisfied is determined by referencing the results of CRC checking made for each sub-block resulting from the decoding process, and the value of the retransmission number counter Nr. If both of these conditions are satisfied, the process goes to step S31, in which the data reception is determined to have been completed or the number of retransmissions is determined to exceed the maximum number, and the data held in the HARQ buffer is discarded. Then, the process goes to step S32. If either of the two conditions is not satisfied, a retransmission is determined to be required, and the process goes to step S32 without performing any operations while holding the data of the HARQ buffer.

After the feedback information is transmitted to the transmitter 2 in step S32, the next data is received in step S33. Processes similar to those of the above described steps S22 to S32 are repeated in step S33 and later.

As described above, the communications system 1 according to this embodiment has the HARQ function in addition to the AMC function. Sub-blocks transmitted from the transmitter 2 to the receiver 3 are set respectively for the antennas, and merged and collectively coded in the coding process. The advantage that not only the error rate characteristic but also the throughput is improved by increasing the coding unit is similar to that achieved in the first embodiment.

In the second embodiment, the HARQ function is further provided, whereby also a retransmission of data from which an error is detected can be controlled in the receiver 3 by using the above described sub-blocks.

<third embodiment>

A communications system 1 according to the third embodiment is a communications system having AMC and HARQ functions. Its configuration is similar to that of the second embodiment, and as depicted in Figs. 22 and 23. If an error is detected in one of antennas, for example, in the configuration where two antennas are provided respectively in the transmitter 2 and the receiver 3 as depicted in Figs. 22 and 23, data is retransmitted also from the other antenna in the second embodiment. If the retransmission process is executed until all of the antennas are determined to be error-free as in the second embodiment, the amount of retransmitted data becomes large.

In the meantime, in the communications system 1 according to the third embodiment, only data required to be retransmitted is retransmitted among control information of AMC, HARQ, etc., which are sequentially generated in the transmitter 2 in accordance with the reception of SNR and feedback information, data determined to be error-free is not retransmitted, and the next data is transmitted. An operational method related to HARQ of the communications system 1 according to the third embodiment is described below with reference to the flowchart.

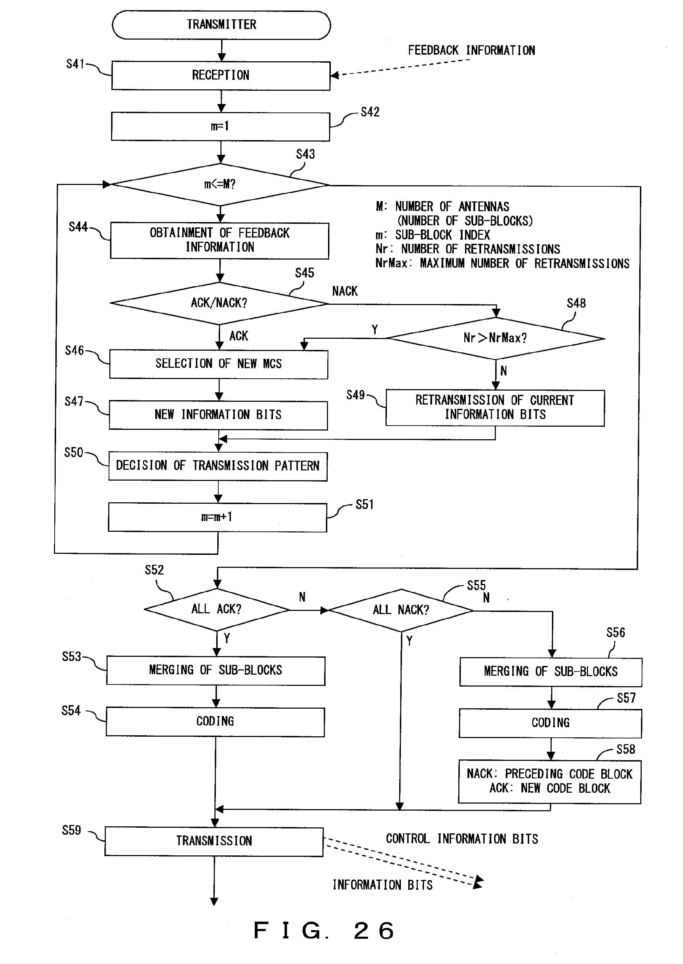

Fig. 26 is the flowchart representing the retransmission control process to which HARQ is applied in the transmitter 2 according to the third embodiment. The retransmission control process of the transmitter according to the third embodiment is specifically described with reference to Fig. 26.

Processes in steps S41 to S43 are respectively correspond to those in steps S1 to S3 represented in Fig. 24, and their explanations are omitted.

Upon obtaining the feedback information of a sub-block corresponding to the value of the sub-block number counter m in step S44, the process goes to step S45, in which it is determined whether contents of the feedback information corresponding to the counter m are either ACK or NACK. If ACK is determined to be included in the feedback information, the process goes to step S46, in which a new MCS is selected, and corresponding information bits are selected in step S47. Then, the process goes to step S50.

In the meantime, if NACK is determined to be included in the feedback information corresponding to the counter m, the process goes to step S48, in which it is further determined whether or not the number of retransmissions Nr exceeds the maximum number of retransmissions NrMax. If the number of retransmissions Nr is determined to exceed the maximum number of retransmissions NrMax, the process goes to step S46 to notify the next MCS. If the number of retransmissions Nr is equal to or smaller than the maximum number of retransmissions NrMax, the process goes to step S49, in which retransmission bits are selected as information bits to be transmitted. Then, the process goes to step S50.

In step S50, the transmission pattern of the sub-block corresponding to the counter m is decided. Then, the counter m is incremented by 1 in step S51, and the process goes back to step S43. If the counter m is determined to exceed the number of sub-blocks in step S43, the process goes to step S52. The processes in steps S43 to S51 are intended to decide whether to retransmit information bits for each sub-block or to transmit information bits corresponding to a new MCS.

In step S52, it is determined whether or not all of pieces of obtained feedback information are ACK. If all of the pieces are determined to be ACK, all of sub-blocks are generated for new information bits but not coded yet. Therefore, the process goes to step S53, in which the sub-blocks are serially merged, and collectively coded in step S54. Then, the sub-block coded bits are transmitted respectively from the antennas in step 559, and the process is terminated. If all of the pieces are determined not to be ACK, the process goes to step S55, in which it is further determined whether or not all of the pieces of obtained feedback information are NACK. If all of the pieces are determined to be NACK, the sub-block coded bits held in the buffer, etc. are read out and retransmitted in step S59. This is because all of the sub-blocks are composed of retransmission bits. Then, the process is terminated.

If ACK is determined to be included in the feedback information in step S55, the process goes to step S56, in which a sub-block to be retransmitted and a sub-block to be newly transmitted are serially merged, and collectively coded in step S57. The sub-blocks resulting from the coding process of step S57 include not only the sub-block to be retransmitted in response to NACK but also the sub-block to be newly transmitted in response to ACK (step S58). Lastly, the sub-block coded bits are transmitted respectively from the antennas in step S59, and the process is terminated.

As described above, the transmitter 2 according to the third embodiment retransmitsonly asub-blockto be retransmitted, and transmits a sub-block that is newly generated based on new information bits for a sub-block that is previously determined to be error-free.

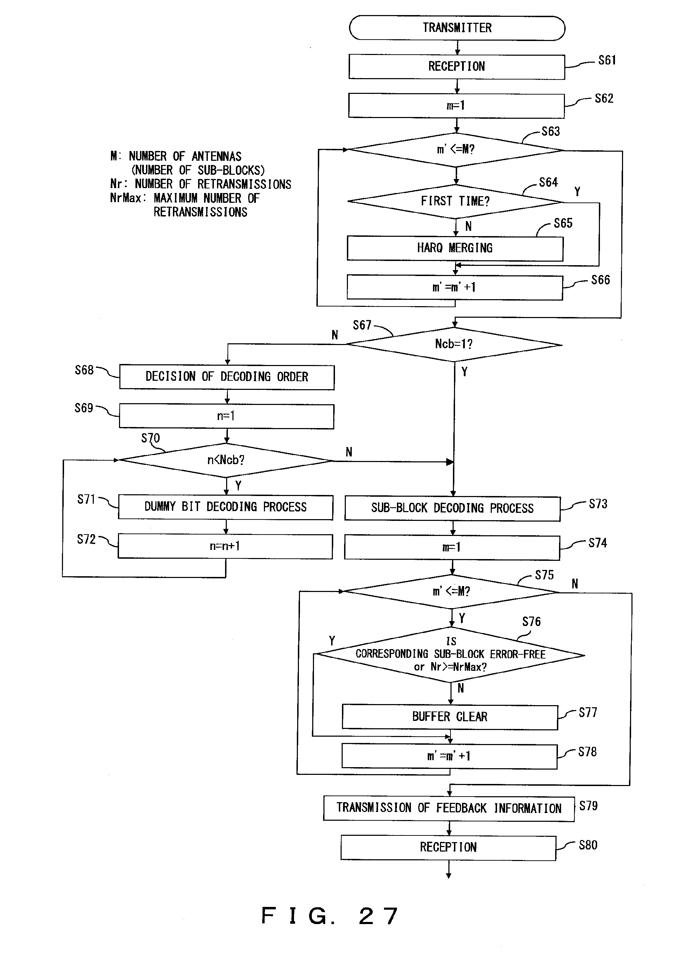

Fig. 27 is a flowchart representing a retransmission control process to which HARQ is applied in the receiver 3 according to the third embodiment. The retransmission control process of the receiver 3 according to the third embodiment is specifically described with reference to Fig. 27.

Processes in steps S61 to S66 are processes for making HARQ merging for received code blocks if they are retransmitted data, and respectively correspond to the processes in steps S21 to S26 shown in Fig. 25.

In step S67, the number of code blocks Ncb is determined. If the number of code blocks Ncb is set to 2 or more, the process goes to step S68. If the number of code blocks Ncb is set to 1, the process goes to step S73. In step S68, the decoding order of the plurality of received code blocks is decided. Examples of a method for deciding the decoding order include a method for sequentially decoding code blocks in descending order of the number of retransmissions of the code blocks. Then, in step S69, a code block number counter n for counting the number of code blocks for which the decoding process has been executed is initialized to 1, and it is determined in step S70 whether or not the value of the code block number counter n is smaller than the number of actually received code blocks Ncb. While the value of the code block number counter n is smaller than the number of code blocks Ncb, the process repeatedly goes back to step S70 each time a dummy bit decoding process in step S71, and a process for incrementing the code block number counter n by 1 in step S72 are executed. If the value of the code block number counter n becomes equal to the number of code blocks Ncb in step S70, the process goes to step S73. Note that the dummy bit decoding process in step S71 is a process for handling a bit already determined to be error-free as a known bit and for making decoding by inserting the value of the bit, and this process is implemented with the known technique.

In step S73, the sub-block decoding process is executed to obtain sub-blocks the number of which is equal to the number of antennas M. Then, the sub-block number counter m' is initialized to 1 in step S74, and it is determined in step S75 whether or not the value of the sub-block number counter m' is equal to or smaller than the number of sub-blocks M.

If the value of the sub-block number counter m' is equal to or smaller than M, the process goes to step S76, in which it is determined whether or not the sub-block corresponding to the value of the counter m' is error-free as a result of CRC checking, or whether or not the number of retransmissions Nr of the sub-block is equal to or larger than the maximum number of retransmissions NrMax. If either of these conditions is satisfied, namely, if this sub-block is determined to be error-free or the number of retransmissions is determined to exceed the maximum number, the process goes to step S77. If none of the conditions are satisfied, no operations are performed.

If either of the above described two conditions is satisfied, the sub-block is properly received or the number of retransmissions exceeds the maximum number. Therefore, data held in the HARQ buffer is discarded in step S77. Then, the sub-block number counter m' is incremented by 1 in step S78, and the process goes back to step S75.

If the processes in steps S76 to S78 are determined to have been executed for all of sub-blocks based on the value of the sub-block number counter m' in step S75, the process goes to step S79, in which feedback information is transmitted to the transmitter 2. Upon receipt of the code block transmitted next from the transmitter 2 in step S80, processes similar to those in the above described steps S62 to S79 are repeated thereafter.

As described above, in the communications system 1 according to this embodiment, a retransmission can be made in units of sub-blocks when the retransmission control is performed by using HARQ. Similar to the above described embodiments, not only the error rate characteristic but also the throughput can be improved by collectively coding sub-blocks. Moreover, a new sub-block is transmitted from an antenna that has previously transmitted a sub-block in a proper manner, whereby the amount of retransmitted data can be reduced, leading to improvements in the throughput.

<fourth embodiment>

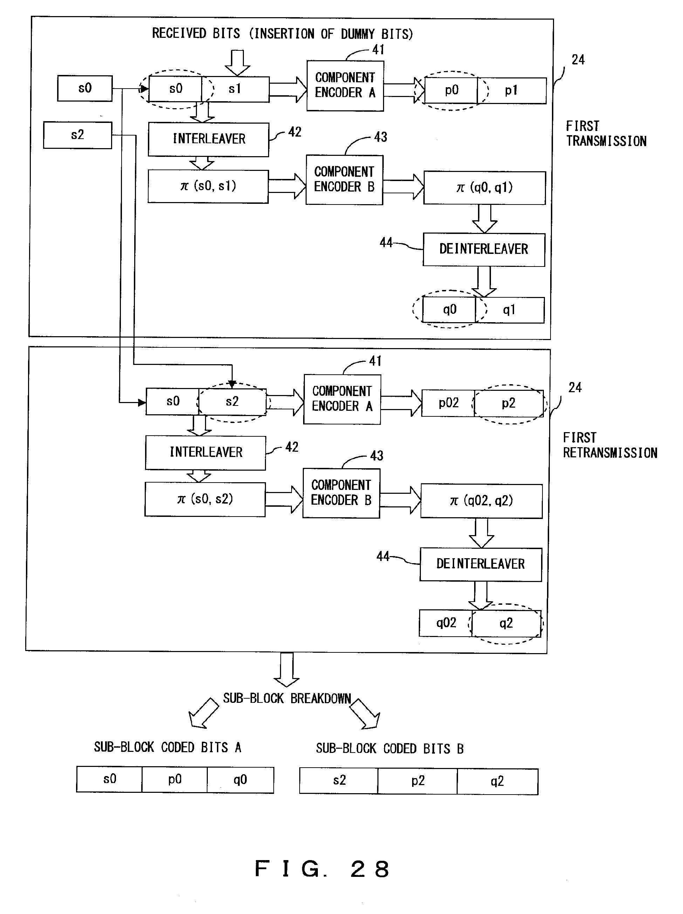

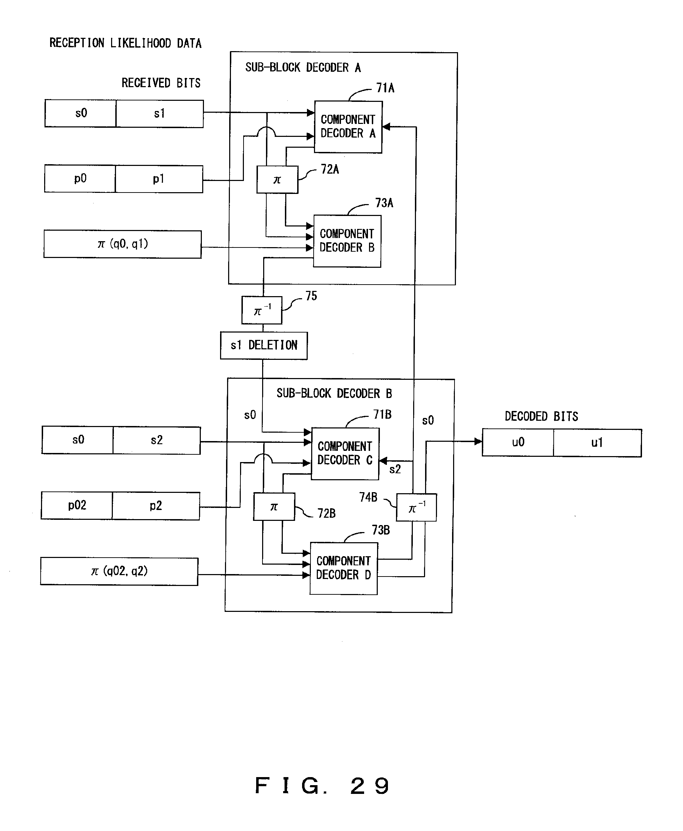

A communications system 1 according to the fourth embodiment adopts decoding procedures that are different from those adopted by the communications system according to the third embodiment. A system configuration and a retransmission controlling method of the fourth embodiment are similar to those of the third embodiment, and as depicted in Figs. 22, 23, 26 and 27. A decoding method according to this embodiment is described below with reference to Figs. 28 and 29.

Fig. 28 is a block diagram depicting a coding unit 24 according to this embodiment. Constituent elements similar to those of the coding unit depicted in Fig. 20 are denoted with the same reference numerals.

A process for coding information bits s0 is depicted in the upper stage of the coding unit 24 represented in Fig. 28. Coded bits that are previously obtained by executing a coding process at the time of the first transmission are stored in a buffer. A process for coding the information bits s0 along with new information bits s2 when the information bits s0 are retransmitted is depicted in the lower stage of Fig. 28. Constituent elements for coding respective information bits are similar to those of Fig. 20, and the coding unit 24 depicted in Fig. 28 is the same as that according to the first embodiment.

For the process for coding the information bits s0, received bits are inserted after the information bits s0 at the time of the first transmission, and the bits are coded as systematic bits. The bit string is decided based on the transmission pattern that is decided in step S50 of Fig. 26 not to retransmit information bits for which ACK is obtained.

As described above, with the coding unit 24 depicted in Fig. 28, also systematic bits including, for example, bits that are not required to be retransmitted can be coded while maintaining a long bit length. As a result, an enhanced error rate characteristic can be maintained.

Fig. 29 is a block diagram depicting a sub-block decoding unit 35 according to the fourth embodiment. Constituent elements similar to those of the sub-block decoding unit depicted in Fig. 21 are denoted with the same reference numerals. Here, assume that input sub-block coded bits A and B are coded by the coding unit 24 depicted in Fig. 28.

In Fig. 29, sub-block decoders to which the sub-block coded bits A and B are initially input are denoted by appending "A" and "B" respectively. In the sub-block decoding unit 35, decoded bits A and B (u0 and u2 respectively in Fig. 29) are obtained in a way such that one of sub-block decoders uses the posteriori probability of the other sub-block decoder each other as extrinsic information.

When posteriori probability that is obtained by the sub-block decoder A is provided to the sub-block decoder B after being deinterleaved by the deinterleaver 75, for example, in the case where a systematic bit sequence that is input to the sub-block decoder A partially includes the bits s1 that are already received (determined to be error-free) as depicted in Fig. 29, the posteriori probability is input to the sub-block decoder B after the bits s1 are deleted.

As described above, the two sub-block decoders A and B are configured by being interconnected and combined via the deinterleaver 75, whereby they operate as if they form one decoder as a whole. Therefore, even if the sub-block coded bits A and B are separately input, desired decoded bits can be obtained. The decoding process is executed collectively for the sub-block coded bits as the whole of the sub-block decoding unit 35. Therefore, the decoding characteristic can be improved.

<fifth embodiment>

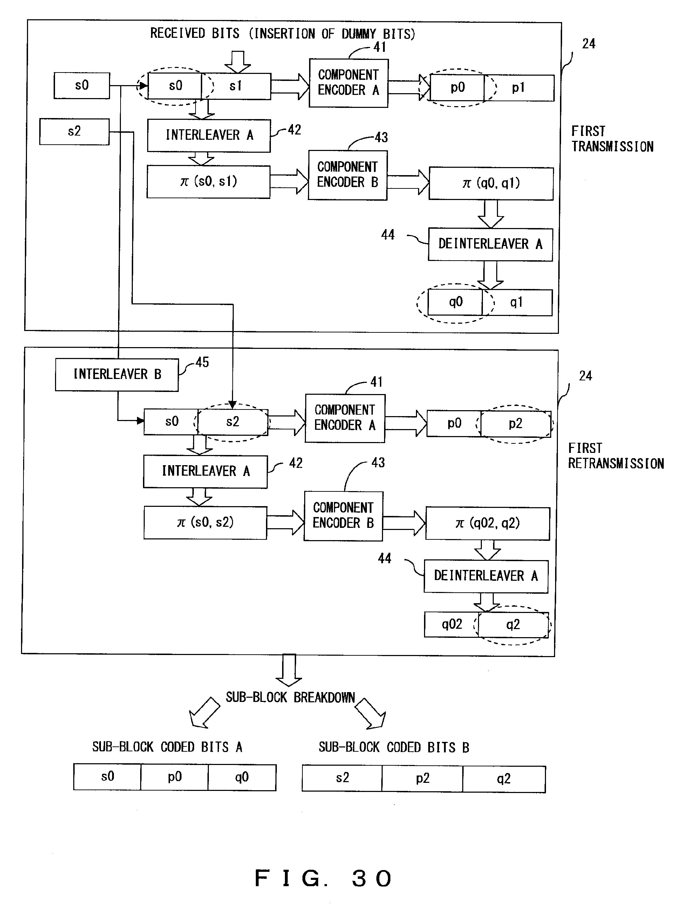

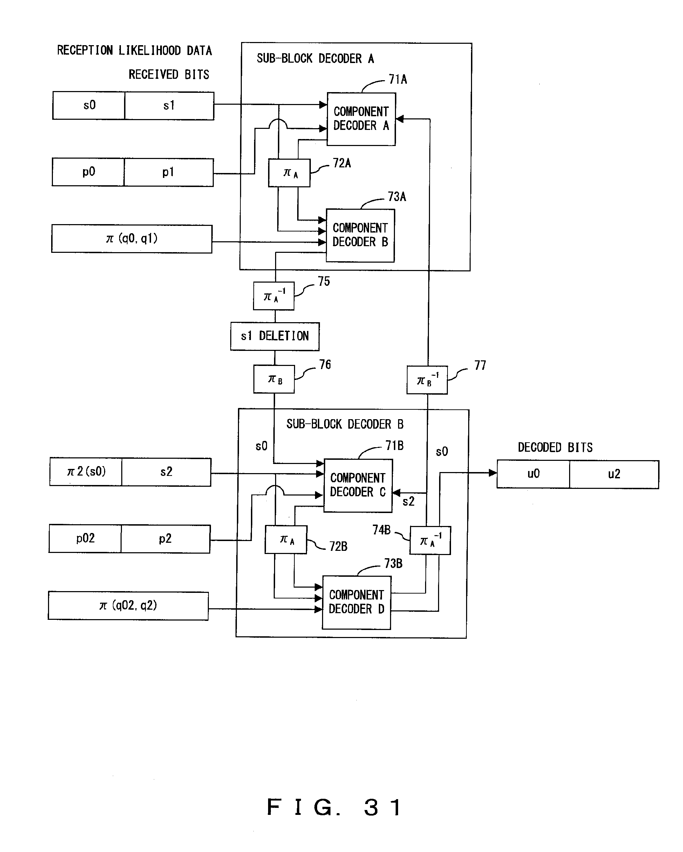

A communications system 1 according to the fifth embodiment is an example where a coding unit 24 and a sub-block decoding unit 35, which are respectively provided in a transmitter and a receiver, are implemented by modifying the coding unit and the sub-block decoding unit, which are respectively provided in the transmitter and the receiver of the communications system according to the fourth embodiment. The coding unit and the sub-block decoding unit according to this embodiment are described below with reference to Figs. 30 and 31.

Fig. 30 is a block diagram depicting the coding unit 24 according to this embodiment. Constituent elements similar to those of Figs. 20 and 28 are denoted with the same reference numerals. Since the coding unit 24 according to this embodiment is the modification example of the above described coding unit according to the fourth embodiment, differences from the configuration depicted in Fig. 28 are mainly described here. In a similar manner as in Fig. 28, a coding process executed in the case where the first transmission process is executed for the information bits s0 is depicted in the upper stage, whereas a coding process executed in the case where a retransmission process is executed for the information bits s0 is depicted in the lower stage.

As depicted in the lower stage of Fig. 30, the information bits s0 to be retransmitted are input to the coding unit 24 after being interleaved by an interleaver 45. The interleaver 45 interleaves bits with a logic different from those of interleavers 42A and 42B for interleaving systematic bits when the parity bit sequence 2 is obtained.

Fig. 31 is a block diagram depicting the sub-block decoding unit 35 according to the fifth embodiment. Constituent elements similar to those of Figs. 21 and 29 are denoted with the same reference numerals. Similar to the coding unit 24 depicted in Fig. 30, differences from the configuration of the sub-block decoding unit 35 according to the fourth embodiment depicted in Fig. 28 are mainly described here.

In the sub-block decoding unit 35 depicted in Fig. 31, posteriori probability obtained by a sub-block decoder A is input to a sub-block decoder B after being interleaved by an interleaver 76. When posteriori probability obtained by the sub-block decoder B is input to the sub-block decoder A, it is input after being deinterleaved by a deinterleaver 77. Such a configuration is required to decode sub-block coded bits coded by the coding unit 24 depicted in Fig. 30. Note that the interleaver 76 and the deinterleaver 77 respectively have a logic different from those of interleavers 72A and 72B and a deinterleaver 74B, which are provided in the sub-block decoders A and B.

As described above, with the communications system 1 according to this embodiment, information bits that are input to the coding unit 24 of the transmitter 2 are interleaved, thereby it can contribute to improving a code characteristic.

<sixth embodiment>

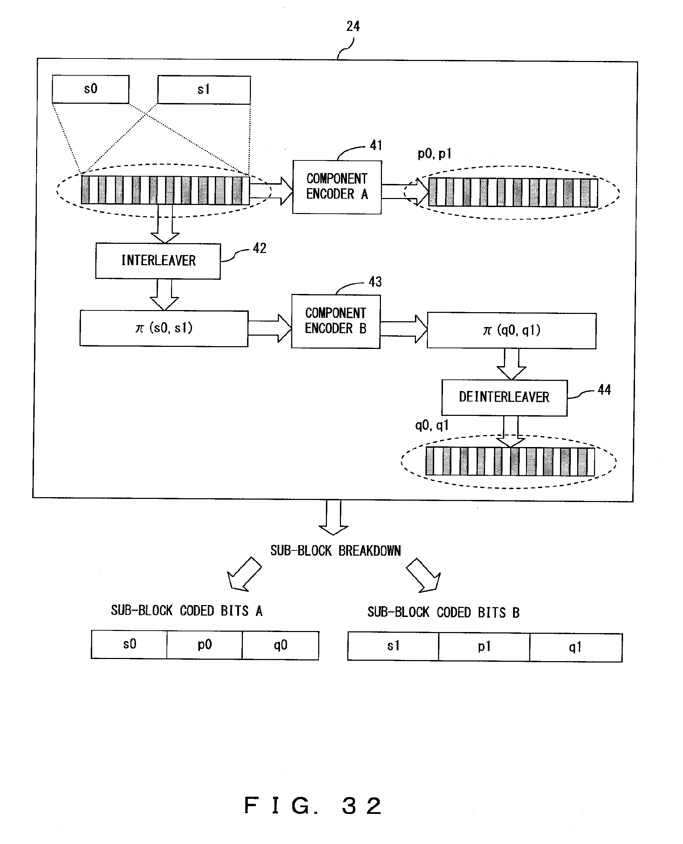

A communications system 1 according to the sixth embodiment is characterized in a method for arranging information bits when a coding process is executed. A process of a coding unit 24 according to this embodiment is described below with reference to Fig. 32.

Fig. 32 is a block diagram depicting the coding unit 24 according to this embodiment. Constituent elements of the coding unit 24 are similar to those of the coding unit 24 according to the first embodiment depicted in Fig. 20. Therefore, their explanations are omitted, and the information bit arranging method according to this embodiment is described here.

When the information bits s0 and s1 are merged and collectively input to the coding unit 24, they are arranged to be evenly positioned in a bit string input to the coding unit 24. Namely, either of the information bits is prevented from being arranged unevenly in a particular portion of the bit string. The state where the information bits s0 and s1 are distributed and arranged in a bit string is represented by applying white and gray colors to the information bits s0 and s1 respectively in Fig. 32.

For the distributed arrangement of the information bits, by way of example, a rate matching pattern algorithm laid down byTR25. 212 of 3GPP as specifications can be used. Specifically, the distributed arrangement of bits according to this embodiment can be implemented by generating k1 puncturing patterns for the total bit length k=k0+k1 (k0 and k1 are the bit lengths of the information bits s0 and s1 respectively), and by arranging the information bits s1 in these positions.

As described above, with the communications system 1 according to this embodiment, information bits are distributed and arranged so that they are not arranged unevenly in a bit string when they are merged and collectively coded by the coding unit 24 of the transmitter 2. As a result, all of information bits addressed to an antenna can be effectively prevented from becoming a reception error, even if some of sub-block coded bits are not properly received by the receiver 3 due to a transmission error occurring when the coded bits are transmitted from the transmitter 2 to the receiver 3.

The description has been provided by taking the coding unit according to the first embodiment as an example here. However, a similar coding process can be executed by applying the rate matching pattern algorithm in a similar manner as in the above described case also when the coding unit according to any of the second to the fifth embodiments is provided.

<seventh embodiment>

A coding method according to the seventh embodiment is a coding method used when code block segmentation is applied.

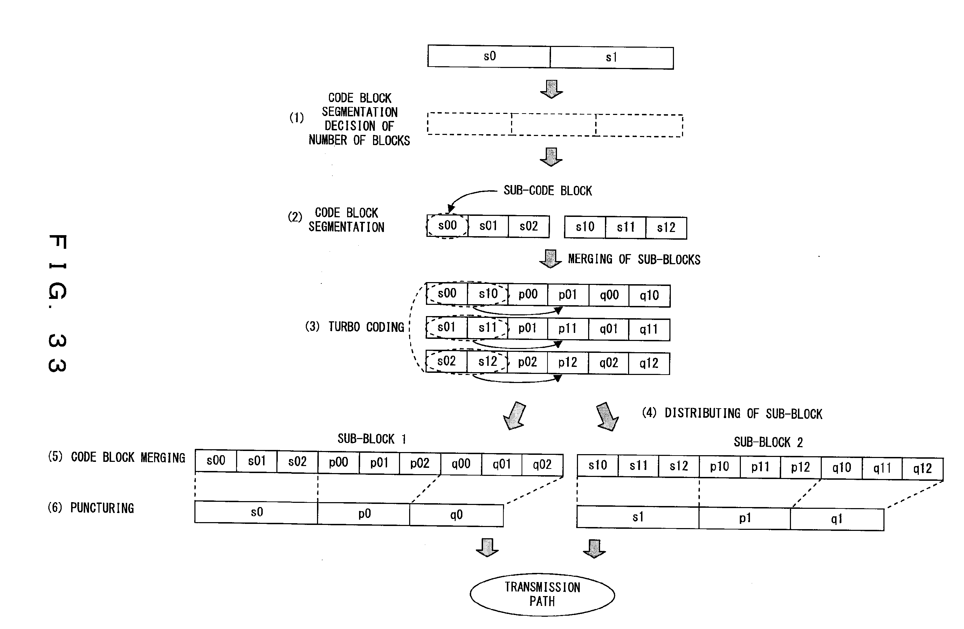

Fig. 33 is a schematic diagram representing the format of data in the case where the coding method according to this embodiment is applied. The coding method according to this embodiment is described by taking as an example a case where segmentation is made because the information lengths of the information bits s0 and s1 are 5116 respectively and their total exceeds 5114x2=10228.

With the code block segmentation method according to this embodiment, the number of partitioned code blocks Nc is decided based on the total of the information lengths as depicted in Fig. 33(1). Here, the number of code blocks Nc is decided so that each bit length of partitioned information bits does not exceed 5114. In the above example, Nc=3 is decided.

Next, as depicted in Fig. 33(2), the information bits are partitioned according to the decided number of code blocks Nc. Here, the information bits s0 and s1 are respectively distributed into three. In the example depicted in Fig. 33, the information bits s0 are distributed into three sub-code blocks s00, s01 and s02, whereas the information bits s1 are distributed into three sub-code blocks s10, s11 and s12.

Then, the coding process is executed as depicted in Fig. 33(3). Here, the coding is made with a turbo code. At this time, the coding is collectively made after the sub-code blocks obtained by distributing the information bits s0 and s1 are combined. In the example depicted in this figure, for example, the sub-code block s00 obtained by distributing the information bits s0, and the sub-code block s10 obtained by distributing the information bits s1 are merged and coded. Specifically, the coding is made by applying the method for collectively coding a plurality of sub-blocks in the above described embodiments to the sub-code blocks s00 and s10. Also the other sub-code blocks of the information bits s0 and s1 are respectively combined and coded in a similar manner. The coded sub-code block coded bits are distributed respectively for the antennas with the above described method as depicted in Fig. 33 (4), and sub-block coded bits are obtained as depicted in Fig. 33(5).

Lastly, after a process such as puncturing, etc. is executed as depicted in Fig. 33(6), the sub-block coded bits are transmitted to the transmission path.

With the conventional code block segmentation methods, the distribution number is decided based on the information length of each information bits. Therefore, the information bits s0 and s1 are respectively distributed into two in the above example. In contrast, with the coding method according to this embodiment, the coding is made after the number of code blocks Nc is decided based on the total of information lengths of information bits. Therefore, the number of partitions is three. Even if the code block segmentation is made for information bits of the same information length when totaled, a coding length can be increased with the coding method according to this embodiment. As a result, the error rate characteristic can be improved.

<eighth embodiment>

The above described embodiment refers to the method for collectively coding sub-blocks with a turbo code. In the meantime, a communications system 1 according to the eighth embodiment executes coding and decoding methods using an LDPC code that is another type of an error correction code.

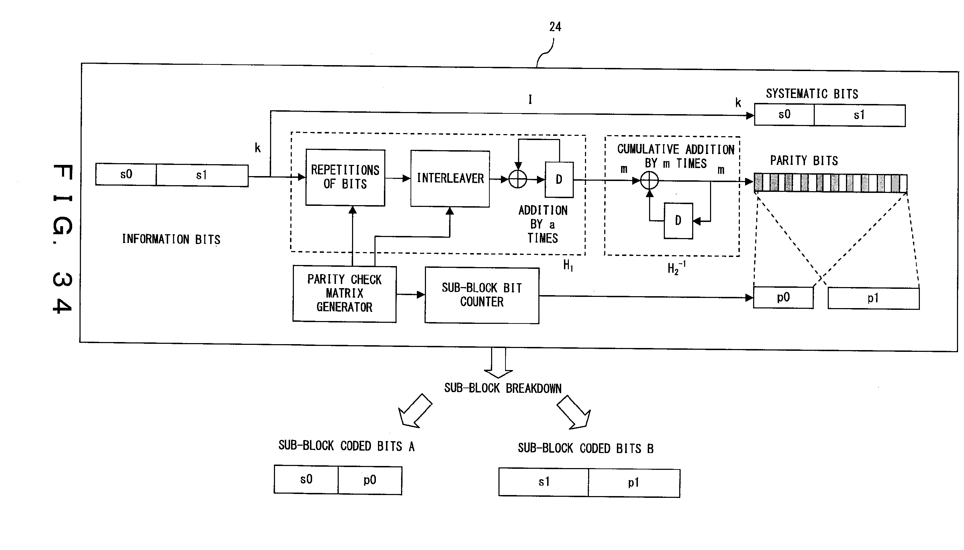

Fig. 34 is a block diagram depicting a coding unit 24 according to this embodiment. Here, the block diagram of the coding unit 24 is depicted by taking an IRA code as an example. Since a conventional technique is used as a specific method of an LDPC code, its explanation is omitted, and a method for obtaining sub-block coded bits by distributing coded bits resulting from coding is described here. Here, assume that the LDPC code is a systematic code.

As previously referred to as the background art, a parity check relational expression is formed with the linear sum of systematic bits and parity bits if an LDPC code is a systematic code. The number of information bits for each sub-block coded bits included in a plurality of parity check relational expressions to which a parity bit belongs is counted for each paritybit, and the parity bit is determined to belong to sub-block coded bits the number of which is the largest. If the number of information bits exceeds the transmission bits of each sub-block coded bits, the parity bit is determined to belong to sub-block coded bit the number of which is the second largest.

As described above, even with an LDPC code, a plurality of sub-blocks can be collectively coded and then partitioned into sub-block coded bits similar to the above described turbo code.

<ninth embodiment>

With a communications system 1 according to the ninth embodiment, the above described coding/decoding methods are applied also to the case where the number of sub-blocks is larger than 2.

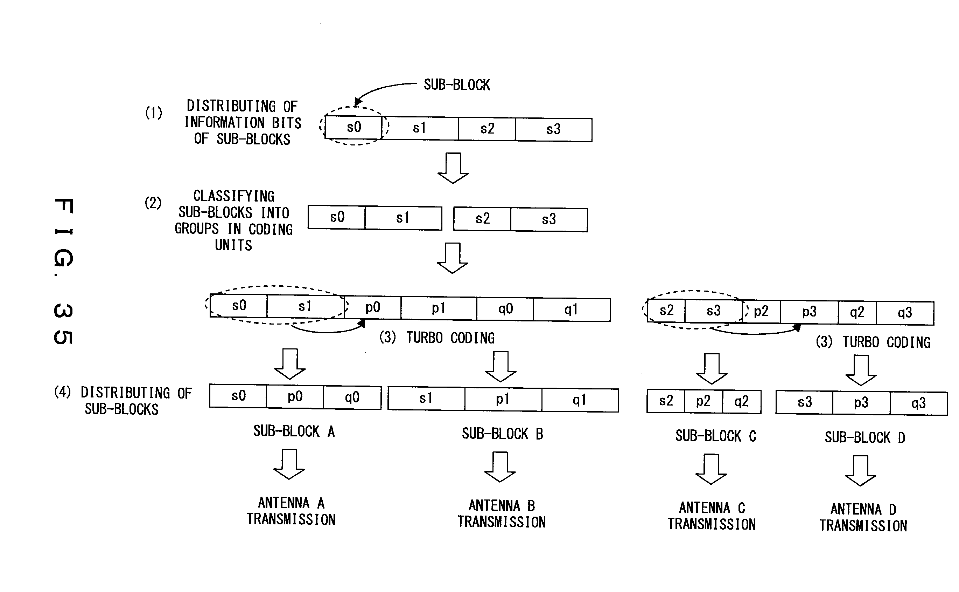

Fig. 35 is a schematic diagram representing the format of data in the case where the coding method according to this embodiment is applied. A process for coding four sub-blocks and a process for distributing coded bits into sub-blocks are described with reference to Fig. 35.

Initially, four sub-blocks s0, s1, s2 and s3 are serially merged as depicted in (1) of Fig. 35. Then, the four sub-blocks are classified into groups each composed of two sub-blocks in code units as depicted in (2). Here, the sub-blocks are classified into a group of the sub-blocks s0 and s1, and a group of the sub-blocks s2 and s3. Then, coding is made respectively for the groups as shown in (3), and sub-block coded bits A, B, C and D are obtained by distributing the coded bits as depicted in (4).

Even if the number of sub-blocks exceeds two, the sub-blocks are classified into groups each composed of two sub-blocks as depicted in Fig. 35, and the above described coding method is respectively applied to the groups, whereby a coding length can be increased and the error rate characteristic can be improved in a similar manner as in the above described embodiments.

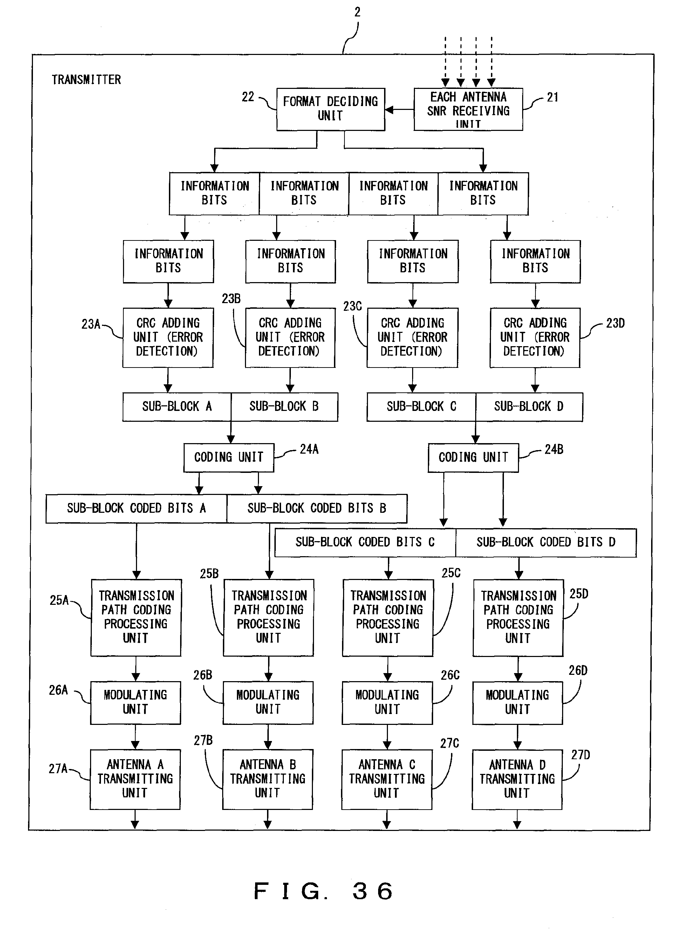

Fig. 36 is a block diagram depicting a transmitter 2 according to the ninth embodiment. Constituent elements similar to those of the above described embodiments are denoted with the same reference numerals as those in the previously used figures. Here, a configuration in the case where four antennas are provided correspondingly to Fig. 35 is depicted. The antennas A, B, C and D that correspond to the four sub-blocks A, B, C and D to be transmitted to a receiver 3 are respectively paired up, and coding similar to the above described one is made.

A method for coding the sub-blocks A and B is taken as an example. A coding unit 24 codes the sub-blocks A and B with the coding method according to any of the above described first to the eighth embodiments. The sub-block coded bits A and B are obtained by distributing the obtained coded bits. A coding unit 24B similarly executes a coding process for the sub-blocks C and D to obtain the sub-block coded bits C and D.

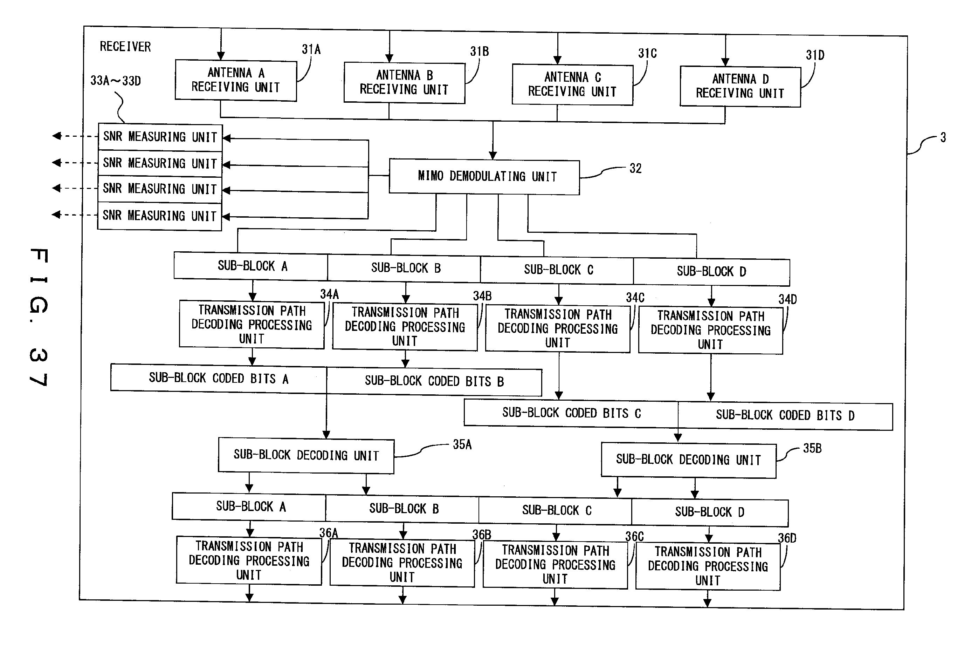

Fig. 37 is a block diagram depicting the receiver 3 according to the ninth embodiment. Constituent elements similar to those of the above described embodiments are denoted with the same reference numerals as those in the previously used figures. The sub-block coded bits A, B, C and D that are respectively received by the antennas are classified into groups each composed of two sub-blocks, and input to sub-block decoding units 35A and 35B. Sub-blocks can be extracted by decoding the sub-block coded bits with a method similar to that of the above described embodiments respectively in the sub-block decoding units 35A and 35B.

The case where a spatial multiplexing transmission is made with MIMO and PARC is applied has been described up to this point. However, the present invention can be applied to other implementations. For example, the above described coding/decoding methods can be applied also to the case where AMC is performed for each of sub-carrier groups (resource blocks) having different SNRs in an OFDM (Orthogonal Frequency Division Multiplexing) transmission.

**Claims**

1. A wireless communications system in which a wireless communication is made between a first communicating apparatus and a second communicating apparatus, wherein:

    the first communicating apparatus comprising:

        an information bit generating unit configured to generate information bits from data to be transmitted,
        a sub-block generating unit configured to generate a sub-block including the information bits in units,
        a coding unit configured to generate coded bits by merging and collectively coding the sub-blocks of plural units, and

a transmitting unit configured to generate sub-block coded bits by distributing the coded bits output from the coding unit, and to transmit the generated sub-block coded bits to the second communicating apparatus.

2. The wireless communications system according to claim 1, wherein:

the second communicating apparatus comprising:

a receiving unit configured to receive the sub-block coded bits, and
a decoding unit configured to obtain the sub-blocks by merging and collectively decoding a plurality of received sub-block coded bits.

3. The wireless communications system according to claim 2, wherein:

the second communicating apparatus further comprises:

a determining unit configured to determine, for each of the sub-block, whether or not a reception error of the sub-block exists, and
a requesting unit configured to issue to the first communicating apparatus a retransmission request of all of the sub-blocks, a sub-block determined to be a reception error and the sub-block obtained by merging and collectively coding with the sub-block determined to be a reception error; and wherein
the transmitting unit of the first communicating apparatus executes a retransmission process in accordance with the retransmission request when receiving the retransmission request.

4. The wireless communications system according to claim 2, wherein:

the second communicating apparatus further comprises:

a determining unit configured to determine, for each of the sub-blocks, whether or not a reception error when receiving the sub-block, and
a requesting unit configured to issue to the first communicating apparatus a retransmission request of a sub-block determined to be a reception error if the determining unit determines the reception error; and

the transmitting unit of the first communicating apparatus executes a retransmission process in accordance with the retransmission request when receiving the retransmission request.

5. The wireless communications system according to claim 4, wherein:

the coding unit is composed of a first coding unit for coding a first sub-block, and a second coding unit for coding a second sub-block; and
the sub-block coded bits are obtained by extracting bits corresponding to information bits of the first and the second sub-blocks by controlling timing at which bits are output from the first and the second coding units.

6. The wireless communications system according to claim 5, wherein:

the decoding unit is composed of a first decoding unit, and a second decoding unit that is connected to the first decoding unit via an interleaver;
the first decoding unit obtains a first posteriori probability on the basis of first sub-block coded bits;
the second decoding unit obtains a second posteriori probability on the basis of second sub-block coded bits by using the first posteriori probability as extrinsic information; and
the second posteriori probability is further used as extrinsic information when decoding is repeatedly made by the first decoding unit.

7. The wireless communications system according to claim 6, wherein:

the second coding unit executes a coding process for a bit string obtained by merging bits input after interleaving information bits of the first sub-block, and information bits of the second sub-block.

**8.** The wireless communications system according to claim 7, wherein:

the second decoding unit uses the first posteriori probability as extrinsic information after interleaving the first posteriori probability, and
the first decoding unit uses the second posteriori probability as extrinsic information after deinterleaving the second a-posteriori probability.

**9.** The wireless communications system according to claim 2, wherein:

the coding unit codes a bit string obtained by distributing and arranging information bits.

**10.** The wireless communications system according to claim 2, wherein:

distribution number is decided based on a total of bit lengths of the information bits when creating segments for the coded bits.

**11.** The wireless communications system according to claim 2, wherein:

the coding unit makes coding by using a turbo code.

**12.** The wireless communications system according to claim 2, wherein:

the coding unit makes coding by using a low density parity check (LDPC) code.

**13.** The wireless communications system according to claim 2, further comprising:

a group generating unit configured to generate a plurality of sub-block groups by classifying sub-blocks into groups each composed a plurality of sub-blocks; wherein
the coding unit makes coding by merging and collectively coding the sub-blocks included in the groups in units of groups; and
the transmitting unit obtains the sub-block coded bits by distributing coded bits, obtained by coding the sub-blocks in units of groups, into the number of sub-blocks included in each group.

**14.** The wireless communications system according to claim 2, wherein:

the sub-block coded bits are obtained by distributing the coded bits, which are obtained by collectively coding the sub-blocks, in accordance with the number of antennas used in a multiple input multiple output (MIMO) system.

**15.** The wireless communications system according to claim 2, wherein:

the sub-block coded bits are obtained by distributing coded bits, which are obtained by merging and collectively coding the sub-blocks, in accordance with the multiplexed number of frequencies in orthogonal frequency division multiplexing (OFDM).

**16.** The wireless communications system according to claim 2, wherein:

the transmitting unit transmits the sub-block coded bits with spatial multiplexing or frequency multiplexing.

**17.** A transmitting apparatus, comprising:

an information bit generating unit configured to generate information bits from data to be transmitted to a receiving apparatus;
a sub-block generating unit configured to generate a sub-block including the information bits in units;
a coding unit configured to generate coded bits by merging and collectively coding sub-blocks of plural units; and
a transmitting unit configured to generate sub-block coded bits by distributing the coded bits output from the coding unit, and for transmitting the generated sub-block coded bits to the receiving apparatus.

**18.** A receiving apparatus, comprising:

a receiving unit configured to receive sub-block coded bits of plural units, which are transmitted from a transmitting apparatus and which are distributed the coded bit obtained by merging and collectively coding sub-blocks of plural units; and
a decoding unit configured to obtain the sub-blocks of plural units by merging and collectively decoding the received sub-block coded bits of plural units.

**19.** A transmitting method, comprising:

generating information bits from data to be transmitted;
generating a sub-block including the information bits in units;
generating coded bits by merging and collectively coding sub-blocks of plural units; and
generating sub-block coded bits by distributing the coded bits, and transmitting the generated sub-block coded bits.

MODULATION METHOD

CODING FORMAT

| s | p |

INFORMATION BIT LENGTH
→ LONG
CODING RATE
→ HIGH

SNR

| s | SYSTEMATIC BITS |
| p | PARITY BIT |

INFORMATION BIT LENGTH
→ SHORT
CODING RATE
→ LOW

| s | p |

ELAPSE OF TIME

F I G. 1

F I G. 2

FIG. 3

F I G. 4

**RECEIVER**

ANTENNA 2 RECEPTION

ANTENNA 1 RECEPTION

SNR MEASUREMENT

MIMO DEMODULATION → TRANSMISSION PATH DECODING PROCESS → BLOCK CODED BITS → DECODING PROCESS → DECODED CODE BLOCK → CRC CHECK (ERROR DETECTION)

**TRANSMITTER**

SNR RECEPTION → FORMAT DECISION → INFORMATION BITS → CRC ADDITION (ERROR DETECTION) → CODE BLOCK → CODING (105) → CODE BLOCK CODED BITS → TRANSMISSION PATH CODING PROCESS → MODULATION → ANTENNA 2 TRANSMISSION

ANTENNA 1 TRANSMISSION

F I G. 5

25

F I G. 6

TRANSMITTER

| ANTENNA 1 SNR RECEPTION | ANTENNA 2 SNR RECEPTION |

| FORMAT DECISION | FORMAT DECISION |

| INFORMATION BITS | INFORMATION BITS |

| CRC ADDITION (ERROR DETECTION) | CRC ADDITION (ERROR DETECTION) |

| CODE BLOCK | CODE BLOCK |

| CODING | CODING |

| CODED BITS | CODED BITS |

| TRANSMISSION PATH CODING PROCESS | TRANSMISSION PATH CODING PROCESS |

| MODULATION | MODULATION |

| ANTENNA 1 TRANSMISSION | ANTENNA 2 TRANSMISSION |

RECEIVER

| ANTENNA 1 RECEPTION | ANTENNA 2 RECEPTION |

SNR MEASUREMENT
SNR MEASUREMENT

NMIMO DEMODULATION

| TRANSMISSION PATH DECODING PROCESS | TRANSMISSION PATH DECODING PROCESS |

| CODED BITS | CODED BITS |

| DECODING PROCESS | DECODING PROCESS |

| CODE BLOCK | CODE BLOCK |

| CRC CHECK (ERROR DETECTION) | CRC CHECK (ERROR DETECTION) |

F I G. 7

DISTRIBUTING OF
INFORMATION BITS
[ s0 ] [ s1 ]

⇩

CRC ADDITION

— CRC PARITY

[ s0 ▨ ]

[ s1 ▨ ]

⇩

— SUB-BLOCK

CODE BLOCKING ⟨ s0 ▨ s1 ▨ ⟩

⇩

CODING ⟨ s0 ▨ s1 ▨ ⟩ | p | q |

TURBO CODING

PUNCTURING | S | p | q |

⇩

TRANSMISSION
PATH

F I G. 8

F I G. 9

RECEPTION
LIKELIHOOD DATA

TURBO DECODER

DECODED BITS

$\hat{u}_j$

$y_s$

COMPONENT
DECODER 1

$\pi$

$\pi^{-1}$

$y_{p1}$

COMPONENT
DECODER 2

$y_{p2}$

FIG. 10

30

F I G. 1 1

DECODED BITS

$\hat{u}_j$

DUMMY BIT POSITION INFORMATION

$\pi^{-1}$

COMPONENT DECODER 1

COMPONENT DECODER 2

DUMMY BIT POSITION INFORMATION

$\pi$

INSERTION OF 0 LIKELIHOOD

DUMMY BITS

INFORMATION BITS

PARITY BITS 1

PARITY BITS 2

RECEPTION LIKELIHOOD DATA

$y_s$

$y_{p1}$

$y_{p2}$

F I G. 1 2

H1 : INFORMATION BIT PART    H2 : PARITY BIT PART

F I G.  1 3

F I G. 1 4

RECEPTION LIKELIHOOD
DATA

$y_s$

$y_p$

LDPC DECODER

111

HORIZONTAL
ARITHMETIC
UNIT

PARITY CHECK
MATRIX
GENERATOR

113

VERTICAL
ARITHMETIC
UNIT

112

DECODED BITS
$\hat{u}_j$

F I G.  1 5

F I G. 1 6

F I G. 1 7

F I G. 1 8

F I G. 1 9

24

| s0 | s1 |

COMPONENT ENCODER A

| p0 | p1 |

41

INTERLEAVER — 42

$\pi$ (s0, s1)

COMPONENT ENCODER B

$\pi$ (q0, q1)

43

DEINTERLEAVER — 44

| q0 | q1 |

SUB-BLOCK BREAKDOWN

SUB-BLOCK CODED BITS A

| s0 | p0 | q0 |

SUB-BLOCK CODED BITS B

| s1 | p1 | q1 |

FIG. 20

**F I G. 2 1**

F I G. 2 2

RECEIVER

31A — ANTENNA A RECEIVING UNIT

ANTENNA B RECEIVING UNIT — 31B

MODULATING UNIT — 62

32 — MIMO DEMODULATING UNIT

33B

SNR MEASURING UNIT

NOTIFICATION SIGNAL GENERATING UNIT — 61

34A — TRANSMISSION PATH DECODING PROCESSING UNIT

TRANSMISSION PATH DECODING PROCESSING UNIT — 34B

33A

37A — HARQ BUFFER UNIT

HARQ MERGING UNIT — 38A

HARQ MERGING UNIT

HARQ BUFFER UNIT — 37B

38B

SUB-BLOCK CODED BITS A

SUB-BLOCK CODED BITS B

35 — SUB-BLOCK DECODING UNIT

SUB-BLOCK A NACK/ACK DETERMINING UNIT

39B

39A

SUB-BLOCK DECODED BITS A

SUB-BLOCK DECODED BITS B

EP 2 066 055 A1

F I G. 2 4

M: NUMBER OF ANTENNAS
      (NUMBER OF SUB-BLOCKS)
Nr: NUMBER OF RETRANSMISSIONS
NrMax: MAXIMUM NUMBER OF
         RETRANSMISSIONS

F I G.  2 5

M: NUMBER OF ANTENNAS
(NUMBER OF SUB-BLOCKS)
m: SUB-BLOCK INDEX
Nr: NUMBER OF RETRANSMISSIONS
NrMax: MAXIMUM NUMBER OF RETRANSMISSIONS

F I G. 2 6

F I G.  2 7

RECEIVED BITS (INSERTION OF DUMMY BITS)

**FIRST TRANSMISSION** — 24

| s0 |

| s0 | s1 | → | COMPONENT ENCODER A | 41 | → | p0 | p1 |

| s2 |

| INTERLEAVER | 42

| $\pi$ (s0, s1) | → | COMPONENT ENCODER B | 43 | → | $\pi$ (q0, q1) |

| DEINTERLEAVER | 44

| q0 | q1 |

**FIRST RETRANSMISSION** — 24

| s0 | s2 | → | COMPONENT ENCODER A | 41 | → | p02 | p2 |

| INTERLEAVER | 42

| $\pi$ (s0, s2) | → | COMPONENT ENCODER B | 43 | → | $\pi$ (q02, q2) |

| DEINTERLEAVER | 44

| q02 | q2 |

SUB-BLOCK BREAKDOWN

SUB-BLOCK CODED BITS A

| s0 | p0 | q0 |

SUB-BLOCK CODED BITS B

| s2 | p2 | q2 |

# F I G.  2 8

RECEPTION LIKELIHOOD DATA

SUB-BLOCK DECODER A

RECEIVED BITS

| s0 | s1 |
|---|---|

| p0 | p1 |
|---|---|

| $\pi$ (q0, q1) |
|---|

71A
COMPONENT
DECODER A

72A
$\pi$

73A
COMPONENT
DECODER B

75
$\pi^{-1}$

s1 DELETION

SUB-BLOCK DECODER B

s0

| s0 | s2 |
|---|---|

| p02 | p2 |
|---|---|

| $\pi$ (q02, q2) |
|---|

71B
COMPONENT
DECODER C
s2

s0

DECODED BITS

| u0 | u1 |
|---|---|

72B
$\pi$

74B
$\pi^{-1}$

73B
COMPONENT
DECODER D

F I G. 2 9

F I G. 3 0

RECEPTION LIKELIHOOD DATA

RECEIVED BITS

SUB-BLOCK DECODER A

| s0 | s1 |
|---|---|

COMPONENT DECODER A — 71A

| p0 | p1 |
|---|---|

$\pi_A$ — 72A

| $\pi$ (q0, q1) |
|---|

COMPONENT DECODER B — 73A

$\pi_A^{-1}$ — 75

s1 DELETION

$\pi_B$ — 76

$\pi_B^{-1}$ — 77

SUB-BLOCK DECODER B

s0

COMPONENT DECODER C — 71B

s0

DECODED BITS

| $\pi$2 (s0) | s2 |
|---|---|

s2

| u0 | u2 |
|---|---|

| p02 | p2 |
|---|---|

$\pi_A$ — 72B

74B — $\pi_A^{-1}$

COMPONENT DECODER D — 73B

| $\pi$ (q02, q2) |
|---|

F I G.  3 1

24

s0    s1

41    p0, p1

COMPONENT
ENCODER A

42

INTERLEAVER

43

COMPONENT
ENCODER B

$\pi$ (s0, s1)    $\pi$ (q0, q1)

44

DEINTERLEAVER

q0, q1

SUB-BLOCK BREAKDOWN

SUB-BLOCK CODED BITS A

| s0 | p0 | q0 |
|----|----|----|

SUB-BLOCK CODED BITS B

| s1 | p1 | q1 |
|----|----|----|

# F I G.  3 2

F I G. 3 3

| s0 | s1 |

(1) CODE BLOCK SEGMENTATION DECISION OF NUMBER OF BLOCKS

SUB-CODE BLOCK

(2) CODE BLOCK SEGMENTATION

| s00 | s01 | s02 | | s10 | s11 | s12 |

MERGING OF SUB-BLOCKS

(3) TURBO CODING

| s00 | s10 | p00 | p01 | q00 | q10 |
| s01 | s11 | p01 | p11 | q01 | q11 |
| s02 | s12 | p02 | p12 | q02 | q12 |

(4) DISTRIBUTING OF SUB-BLOCK

SUB-BLOCK 1

(5) CODE BLOCK MERGING

| s00 | s01 | s02 | p00 | p01 | p02 | q00 | q01 | q02 |

SUB-BLOCK 2

| s10 | s11 | s12 | p10 | p11 | p12 | q10 | q11 | q12 |

(6) PUNCTURING

| s0 | p0 | q0 |

| s1 | p1 | q1 |

TRANSMISSION PATH

F I G. 3 4

EP 2 066 055 A1

F I G. 3 5

55

2

TRANSMITTER

22 — FORMAT DECIDING UNIT ← EACH ANTENNA SNR RECEIVING UNIT — 21

INFORMATION BITS | INFORMATION BITS | INFORMATION BITS | INFORMATION BITS

INFORMATION BITS | INFORMATION BITS | INFORMATION BITS | INFORMATION BITS

23B — 23C

23A — CRC ADDING UNIT (ERROR DETECTION) | CRC ADDING UNIT (ERROR DETECTION) | CRC ADDING UNIT (ERROR DETECTION) | CRC ADDING UNIT (ERROR DETECTION) — 23D

SUB-BLOCK A | SUB-BLOCK B | SUB-BLOCK C | SUB-BLOCK D

CODING UNIT — 24A | CODING UNIT — 24B

SUB-BLOCK CODED BITS A | SUB-BLOCK CODED BITS B

SUB-BLOCK CODED BITS C | SUB-BLOCK CODED BITS D

25B | 25C

25A — TRANSMISSION PATH CODING PROCESSING UNIT | TRANSMISSION PATH CODING PROCESSING UNIT | TRANSMISSION PATH CODING PROCESSING UNIT | TRANSMISSION PATH CODING PROCESSING UNIT 25D

26B | 26C | 26D

26A — MODULATING UNIT | MODULATING UNIT | MODULATING UNIT | MODULATING UNIT

27B | 27C | 27D

27A — ANTENNA A TRANSMITTING UNIT | ANTENNA B TRANSMITTING UNIT | ANTENNA C TRANSMITTING UNIT | ANTENNA D TRANSMITTING UNIT

F I G. 3 6

56

FIG. 37

RECEIVER 3

33A~33D

SNR MEASURING UNIT
SNR MEASURING UNIT
SNR MEASURING UNIT
SNR MEASURING UNIT

ANTENNA A RECEIVING UNIT — 31A
ANTENNA B RECEIVING UNIT — 31B
ANTENNA C RECEIVING UNIT — 31C
ANTENNA D RECEIVING UNIT — 31D

MIMO DEMODULATING UNIT — 32

SUB-BLOCK A
SUB-BLOCK B
SUB-BLOCK C
SUB-BLOCK D

TRANSMISSION PATH DECODING PROCESSING UNIT — 34A
TRANSMISSION PATH DECODING PROCESSING UNIT — 34B
TRANSMISSION PATH DECODING PROCESSING UNIT — 34C
TRANSMISSION PATH DECODING PROCESSING UNIT — 34D

SUB-BLOCK CODED BITS A
SUB-BLOCK CODED BITS B
SUB-BLOCK CODED BITS C
SUB-BLOCK CODED BITS D

SUB-BLOCK DECODING UNIT — 35A
SUB-BLOCK DECODING UNIT — 35B

SUB-BLOCK A
SUB-BLOCK B
SUB-BLOCK C
SUB-BLOCK D

TRANSMISSION PATH DECODING PROCESSING UNIT — 36A
TRANSMISSION PATH DECODING PROCESSING UNIT — 36B
TRANSMISSION PATH DECODING PROCESSING UNIT — 36C
TRANSMISSION PATH DECODING PROCESSING UNIT — 36D

57

| **INTERNATIONAL SEARCH REPORT** | International application No. |
|---|---|
| | PCT/JP2006/319604 |

**A. CLASSIFICATION OF SUBJECT MATTER**
*H04L1/00(2006.01)i, H04J15/00(2006.01)i, H04Q7/38(2006.01)i*

According to International Patent Classification (IPC) or to both national classification and IPC

**B. FIELDS SEARCHED**

Minimum documentation searched (classification system followed by classification symbols)
H04L1/00, H04J15/00, H04Q7/38

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-510007 A  (Samsung Electronics Co., Ltd.),<br>24 July, 2001 (24.07.01),<br>Full text; all drawings<br>& WO 1999/50963 A1       & US 2003/0188249 A1 | 1-19 |
| A | JP 2000-201085 A  (NTT Mobile Communications Network Inc.),<br>18 July, 2000 (18.07.00),<br>Full text; all drawings<br>(Family: none) | 1-19 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    21 December, 2006 (21.12.06) | Date of mailing of the international search report<br>    09 January, 2007 (09.01.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/319604

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2002-171175 A  (Matsushita Electric Industrial Co., Ltd.), 14 June, 2002 (14.06.02), Full text; all drawings & WO 2002/045272 A1     & US 2003/0009719 A1 & EP 1339170 A1 | 1-19 |
| A | WO 2006/070465 A1  (Fujitsu Ltd.), 06 July, 2006 (06.07.06), Full text; all drawings (Family: none) | 1-19 |

Form PCT/ISA/210 (continuation of second sheet) (April 2005)

**EP 2 066 055 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 06070465 A
- WO 06075417 A